# EUROPÄISCHE PATENTSCHRIFT

(11) **EP 3 434 406 B1**
(45) Veröffentlichungstag und Bekanntmachung des Hinweises auf die Patenterteilung: **22.12.2021**
(21) Anmeldenummer: 18186273.1
(22) Anmeldetag: 30.07.2018
(51) Int. Cl.: B23K 11/11, B23K 11/26, B21C 47/24, B23K 101/16

(54) **VORRICHTUNG ZUM VERBINDEN VON MATERIALBAHNEN**
DEVICE FOR CONNECTING MATERIAL SHEETS
DISPOSITIF DE RACCORDEMENT DE BANDES DE MATIÈRE

(30) Priorität: 28.07.2017 DE 102017117145
(43) Veröffentlichungstag der Anmeldung: 30.01.2019
(73) Patentinhaber: Hauni Maschinenbau GmbH, 21033 Hamburg (DE)
(72) Erfinder: Grothaus, Frank, 26871 Papenburg (DE); Horn, Matthias, 22926 Ahrensburg (DE); Henning, Axel, 22113 Oststeinbek (DE); Busch, Karl Richard, 22767 Hamburg (DE)
(74) Vertreter: Eisenführ Speiser

(56) Entgegenhaltungen:
- EP-A1- 2 221 120
- EP-A2- 1 108 492
- DE-A1- 3 345 452
- DE-A1- 4 041 041
- DE-U1- 29 510 277

## Beschreibung

Die Erfindung betrifft eine Vorrichtung der Tabak verarbeitenden Industrie zum Verbinden einer ablaufendwen, Metall aufweisenden Materialbahn mit einer zulaufenden neuen, Metall aufweisenden Materialbahn.

Metall aufweisende Materialbahnen, die insbesondere in Form von Metallbändern vorliegen, werden beispielsweise zur Herstellung von Metallstreifen verwendet, die in sog. "heat-not-burn"-Produkten oder -Artikeln der Tabak verarbeitenden Industrie eingesetzt werden, um die Erzeugung der benötigten Hitze zu ermöglichen, zu unterstützen bzw. zu beeinflussen. Dies lässt sich beispielsweise mittels Induktion realisieren, wenn der Metallstreifen ferromagnetisches Material aufweist. Grundsätzlich lassen sich Metall aufweisende Materialbahnen auch zu anderen Zwecken in Artikeln der Tabak verarbeitenden Industrie einsetzen, und zwar beispielsweise um die Stabilität bzw. Steifigkeit des Artikels zu erhöhen oder im Falle von Elektrozigaretten Leiterbahnen zu bilden.

Für den laufenden Herstellungsprozess ist eine ständige Bereitstellung der Materialbahn von hoher Bedeutung. Da die Materialbahn naturgemäß nur in einer endlichen Länge zur Verfügung steht, muss von Zeit zu Zeit die ablaufende alte Materialbahn mit einer zulaufenden neuen Materialbahn verbunden werden, wozu die eingangs genannte Vorrichtung vorgesehen ist. Die Materialbahnen werden zumeist von Bobinen abgezogen, auf denen sie aufgewickelt sind. Bei der maschinellen Verarbeitung der Materialbahnen tritt bei einem drohenden Leerlaufen einer Bobine das Problem auf, die ablaufende Materialbahn mit einer Materialbahn einer neuen Bobine verbinden zu müssen. Vorrichtungen nach dem Oberbegriff des Anspruchs 1 sind beispielsweise in der DE 33 45 452 A1, der EP 1 108 492 A2 und der DE 295 10 277 U1 offenbart. Bei den dort offenbarten Vorrichtungen wird die Bewegung der Materialbahnen während des Verbindens unterbrochen. Um beim Austauschen der Bobinen eine Unterbrechung des Fertigungsprozesses zu vermeiden, sollte das Verbinden bei laufenden Materialbahnen geschehen, insbesondere wenn kein Zwischenspeicher zum Einsatz kommt.

Es ist eine Aufgabe der vorliegenden Erfindung, eine Vorrichtung der eingangs genannten Art zu schaffen, mit der sich eine Verbindung von Metall aufweisenden Materialbahnen auf sichere und zugleich einfache Weise realisieren lässt.

Diese Aufgabe wird gelöst mit einer Vorrichtung für die Tabak verarbeitende Industrie zum Verbinden einer ablaufenden, Metall aufweisenden Materialbahn mit einer zulaufenden neuen, Metall aufweisenden Materialbahn gemäß Anspruch 1, mit
- einer Anordnung aus zwei Segmenten, die unter Bildung eines Zwischenraumes zur Aufnahme einer Anordnung von übereinanderliegenden, zu verbindenden Materialbahnen, die eine ablaufende, Metall aufweisende Materialbahn und eine zulaufende neue, Metall aufweisende Materialbahn umfassen, voneinander beanstandet sind und jeweils eine Stirnfläche aufweisen, wobei mindestens eines der Segmente bewegbar gelagert und in eine Arbeitsstellung verbringbar ist, in der seine Stirnfläche der Stirnfläche des anderen Segmentes in einem minimalen Abstand unter Einschluss der Anordnung der zu verbindenden Materialbahnen gegenüberliegt,
- einer Antriebseinrichtung zur Bewegung des mindestens einen Segmentes,
- einer Elektroschweißeinrichtung mit einer ersten Elektrodenanordnung der einen Polarität und einer zweiten Elektrodenanordnung der anderen Polarität, wobei die Stirnfläche des einen Segmentes zumindest mit einem Abschnitt der ersten Elektrodenanordnung und die Stirnfläche des anderen Segmentes zumindest mit einem Abschnitt der zweiten Elektrodenanord-nung versehen ist und die Elektroschweißeinrichtung ausgebildet ist, in der Arbeitsstellung der Segmente (32, 34) einen Schweißvorgang zur Verbindung der Materialbahnen (12a, 12b) zu bewirken, und
- einer Steuerungseinrichtung, die zur Steuerung der Antriebseinrichtung und derart ausgebildet ist, dass das mindestens eine bewegbar gelagerte Segment in die Arbeitsstellung verbracht und anschließend von der Arbeitsstel-lung entfernt wird,
- die Steuerungseinrichtung ausgebildet ist, das mindestens eine bewegbar gelagerte Segment mit seiner Stirnfläche auf eine Bewegung der Anordnung der zu verbindenden Materialbahnen derart abzustimmen, dass in der Arbeitsstellung das mindestens eine bewegbar gelagerte Segment mit seiner Stirnfläche mit etwa synchroner Geschwindigkeit und etwa parallel zu der Anordnung der zu verbindenden Materialbahnen bewegt wird.

Mithilfe der Erfindung lässt sich eine Verbindung von Metall aufweisenden Materialbahnen auf einfache und zugleich effektive Weise erzielen. Dies wird insbesondere dadurch erreicht, dass eine Elektroschweißeinrichtung verwendet wird, wobei mindestens eine ihrer beiden Elektrodenanordnungen in einem beweglichen Segment angeordnet ist, das für den Schweißvorgang in eine Arbeitsstellung verbringbar, ohne den fortlaufenden Transport der Materialbahn(en) zu beeinflussen. Dabei macht sich die Erfindung unter anderem die Erkenntnis zunutze, dass sich mithilfe von Elektroschweißen in einem äußerst kurzen Zeitraum, der in der Regel nicht länger als eine Sekunde beträgt, eine sichere Verbindung von Metall aufweisenden Materialbahnen der Tabak verarbeitenden Industrie erzielen lässt, ohne dass eine zu starke und somit zerstörerische Wärmeentwicklung zu befürchten ist, nicht zuletzt weil die beim Schweißvorgang entstehende Wärme über die Stirnflächen der Segmente abgeleitet werden kann.

Dadurch, dass die Steuerungseinrichtung ausgebildet ist, das mindestens eine bewegbar gelagerte Segment mit seiner Stirnfläche auf eine Bewegung der Anordnung der zu verbindenden Materialbahnen derart abzustimmen, dass in der Arbeitsstellung das mindestens eine bewegbar gelagerte Segment mit seiner Stirnfläche mit etwa synchroner Geschwindigkeit und etwa parallel zu der Anordnung der zu verbindenden Materialbahnen bewegt wird, müssen die Materialbahnen zumindest für eine gewisse Zeit möglichst synchron und parallel zueinander laufen, um sie dann mittels Elektroschweißen miteinander verbinden zu können, währenddessen die Bewegungsgeschwindigkeit der zulaufenden neuen Materialbahn zumindest in etwa der Bewegungsgeschwindigkeit der ablaufenden alten Materialbahn entspricht.

Bevorzugte Ausführungen und Weiterbildungen der Erfindung sind in den abhängigen Ansprüchen angegeben.

Bei einer bevorzugten Ausführung weist die Elektroschweißeinrichtung mindestens einen Kondensator zur Zwischenspeicherung von elektrischer Energie auf. Vor dem Hintergrund, dass die Zeitintervalle zwischen den Wechseln der Materialbahnen relativ lang ist, macht sich die Erfindung bei dieser Ausführung die Erkenntnis zunutze, dass sich ein Kondensator als Speicher von großer elektrischer Energie verwenden lässt, die innerhalb kürzester Zeit zur Versorgung eines ener-gieintensiven Verbrauchers wie einer Elektroschweißeinrichtung abgegeben werden kann, während demgegenüber an die externe elektrische Energieversorgung keine hohen Anforderungen gestellt werden müssen, da für den Aufladevorgang deutlich mehr Zeit zur Verfügung steht. Bevorzugt ist der Kondensator in der Vorrichtung stationär angeordnet und ist für die Übertragung der aus dem Kondensator entladenen elektrischen Energie an die Elektrodenanordnung jeweils ein Kabel in ein Segment geführt und an die dort vorgesehene Elektrodenanordnung angeschlossen. Alternativ ist es aber auch grundsätzlich denkbar, den Kondensator an einem der Segmente anzuordnen und zum Aufladen insbesondere entweder einen Stromschalter vorzusehen oder das Segment mit seitlichen Kontaktflächen zu versehen, die mit stationären Schleifkontakten in Berührung stehen.

Bevorzugt weisen die Elektrodenanordnungen jeweils mindestens eine für das Punktschweißen ausgebildete Elektrode auf. Bei einer Weiterbildung dieser Ausführung können die Elektrodenanordnungen der Elektroschweißeinrichtung bei Bedarf jeweils mehrere Punktschweißelektroden aufweisen, die, in Bewegungsrichtung der Materialbahnen betrachtet, neben- und/oder hintereinander angeordnet sind. Punktschweißen hat gegenüber Flächenschweißen den Vorteil, dass verhältnismäßig wenig elektrische Energie benötigt wird und nur eine räumlich sehr begrenzte Wärmeentwicklung stattfindet, zumal für dünne Metall aufweisende Materialbahnen wie beispielsweise dünne Blechstreifen, Punktschweißen zur Erzielung einer zuverlässigen Verbindung völlig ausreichend ist.

Vorzugsweise weist mindestens ein Segment eine Elektrodenverstelleinrichtung auf, die ausgebildet ist, die Elektrodenanordnung räumlich gegenüber der Stirnfläche und insbesondere in ihrer Höhe gegenüber der Stirnfläche zu verstellen. Zweckmäßigerweise eignet sich hierfür ein Gewindebolzen, der mit der Elektrodenanordnung derart gekoppelt ist, dass eine Drehung des Gewindebolzens eine Verstellung der Elektrodenanordnung bewirkt; die Verwendung eines Gewindebolzens ist insoweit von Vorteil, als dass er auf konstruktiv besonders einfache Weise eine besonders genaue Verstellmöglichkeit bietet.

Grundsätzlich kann die Elektroschweißeinrichtung so ausgebildet sein und betrieben werden, dass deren Elektrodenanordnungen dauerhaft unter Spannung stehen, die dabei auf einen Wert eingestellt ist, der die Bildung eines Funkens oder Lichtbogens zwischen den beiden Elektrodenanordnungen automatisch bewirkt, wenn ein vorgegebener minimaler Abstand zwischen den beiden Elektrodenan-ordnungen unterschritten wird, was bei Eintritt der Segmente in die Arbeitsstellung der Fall ist. Demnach kann die Elektroschweißeinrichtung dauerhaft aktiv sein.

Alternativ zu einer dauerhaften Aktivierung der Elektroschweißeinrichtung ist es auch denkbar, die Steuerungseinrichtung ferner zur Steuerung der Elektroschweißeinrichtung derart auszubilden, dass in der Arbeitsstellung der Segmente die Elektroschweißeinrichtung für ein bestimmtes Zeitintervall aktiviert wird, so dass bei dieser Ausführung eine aktive Steuerung der Elektroschweißeinrichtung stattfindet.

Ferner kann die Anordnung aus den beiden Segmenten derart getroffen sein, dass in der Arbeitsstellung die Stirnfläche des einen Segmentes in zumindest berührenden Eingriff mit der einen Seite der Anordnung der zu verbindenden Materialbahnen und die Stirnfläche des anderen Segmentes in zumindest berührenden Eingriff mit der gegenüberliegenden anderen Seite der Anordnung der zu verbindenden Materialbahnen bringbar ist.

Bei einer weiteren bevorzugten Ausführung ist die Antriebseinrichtung und die Steuerungseinrichtung zur Steuerung der Antriebseinrichtung derart ausgebildet, dass das mindestens ein bewegbar gelagertes Segment von einer Anfangsruhestellung in die Arbeitsstellung beschleunigt, von der Arbeitsstellung in eine Endruhestellung abgebremst und anschließend einer entgegengesetzten Bewegung von der Endruhestellung in die Anfangsruhestellung unterworfen wird. Eine solche begrenzte Bewegung des mindestens eine bewegbar gelagerten Segmentes ist insbesondere dann vorteilhaft, wenn zur Versorgung von elektrischer Energie Kabel zu den Elektrodenanordnungen in den Segmenten geführt sind, da die erwähnte begrenzte reziproke Bewegung eine zu intensive Bewegung und insbesondere Überdrehung des Kabels und somit einen Kabelbruch verhindert. Dies gilt insbesondere auch im Falle einer drehbaren Lagerung der Segmente, wobei bevorzugt der Winkelabstand zwischen der Anfangsruhestellung und der Endruhestellung auf etwa 270° begrenzt ist. Bei einer vorteilhaften Weiterbildung dieser Ausführung befindet sich die Arbeitsstellung etwa in der Mitte des Bewegungsweges zwischen der Anfangsruhestellung und der Endruhestellung.

Für Montage- und Wartungszwecke ist es von Vorteil, wenn das Segment zwei Gehäusehälften aufweist.

Grundsätzlich können Metall aufweisende Materialbahnen mit von Anwendung zu Anwendung unterschiedlicher Breite und/oder in Form eines geschlossenen oder perforierten oder netz- oder gitterförmigen Streifens verwendet werden.

Vorzugsweise ist eine Materialbahnbereitstellungseinrichtung vorgesehen, die mindestens zwei Bobinenlagerelemente aufweist, von denen jedes Bobinenlagerelement zur drehbaren Lagerung einer Bobine mit einer Metall aufweisenden Materialbahn vorgesehen ist. Die Bobinenlagerelemente können stationär angeordnet sein. Alternativ ist es aber auch denkbar, die Bobinenlagerelemente an einer bewegbaren, vorzugsweise drehbar gelagerten und als Teller ausgebildeten, Halterung anzuordnen, wodurch sich ein Bobinenwechsel leichter bewerkstelligen lässt. Im Falle der zuletzt genannten Alternative weist bevorzugt die Halterung benachbart zu jedem Bobinenlagerelement ein, vorzugsweise als Rolle ausgebildetes, Führungselement auf, das zur leichteren Führung der von der Bobine abzuwickelnden Materialbahn in Richtung auf die Anordnung der Segmente vorgesehen ist. Für den Fall, dass die Bobine breiter als die dort aufgewickelte Materialbahn ist und insbesondere die Breite der Bobine ein Vielfaches der Breite der Materialbahn beträgt, ist es von Vorteil, die Materialbahnbereitstellungseinrichtung mit einer Zentriereinrichtung zu versehen, die ausgebildet ist, die Materialbahnen in einer definierten Orientierung zu der Anordnung der Segmente zu führen, wo sie ja dann miteinander verbunden werden, wobei vorzugsweise die Zentriereinrichtung eine winklig oder quer zur Bewegungsrichtung der Materialbahnen beweglich gelagerte Rolle aufweist.

Wenn Führungsrollen zur Führung der Materialbahn vorgesehen sind, ist es von Vorteil, zumindest die nach der Materialbahnbereitstellungseinrichtung stromabwärts nächstgelegene Rolle ballig zu gestalten, indem deren Umfangsfläche über ihre Breite, die bevorzugt im Wesentlichen der Breite der geführten Materialbahn entspricht, im Querschnitt zumindest geringfügig nach außen gewölbt ist. Dadurch lässt sich zum einen besonders wirksam eine in Querrichtung wirkende, oszillierende Bewegung, der die Materialbahn beim Abziehen von der jeweiligen Bobine unterworfen wird, beseitigen, so dass nach Passieren einer ersten ballig ausgeführten Rolle die Materialbahn in einen ruhigen Geradeauslauf überführt wird und somit dann ohne störende Querbewegungen läuft. Zum anderen bewirkt die Wölbung, dass sich beim Punktschweißen die gegenüberliegenden Materialbahnen an ihrem nächstliegenden Punkt und somit im Wesentlichen in der Mitte berühren. Die zuvor beschriebene ballige Ausführung einer Führungsrolle bildet alternativ auch einen eigenständigen Erfindungsgedanken.

Für eine besonders wirkungsvolle Ableitung von beim Schweißvorgang entstandener Wärme weist bevorzugt die Stirnfläche mindestens eines Segmentes wärmeleitfähiges Material auf.

Bei einer weiteren besonders bevorzugten Ausführung ist das mindestens eine bewegbar gelagerte Segment um eine Drehachse verschwenkbar gelagert, die im Wesentlichen parallel zu einer von der Anordnung der zu verbindenden Materialbahnen aufgespannten Ebene und im Wesentlichen rechtwinklig zur Bewegungsrichtung der Anordnung der zu verwendenden Materialbahnen orientiert ist. Bei dieser Ausführung wird das Segment bzw. werden die Segmente unter Verringerung des Abstandes zwischen ihren Stirnflächen in die Arbeitsstellung verschwenkt, in der der Abstand zwischen den dann gegenüberliegenden Stirnflächen nicht größer ist als die Dicke der dazwischenliegenden Anordnung der zu verbindenden Materialbahnen und der Schweißvorgang startet. Diese Schwenkbewegung erfolgt vorzugsweise in Richtung der Bewegung der Materialbahnen. Die Stirnfläche des Segmentes lässt sich in einen Einlaufbereich, der in Bezug auf die Schwenkbewegung einen vorlaufenden Abschnitt bildet, und einen Auslaufbereich unterteilen, der in Bezug auf die Schwenkbewegung einen nachlaufenden Abschnitt bildet, wobei sich zwischen dem Einlaufbereich und dem Auslaufbereich die Elektrodenanordnung befindet.

Der Einlaufbereich und der Auslaufbereich können zueinander derart angewinkelt sein, dass der Abstand der Stirnfläche von der Drehachse im Bereich der Elektrodenanordnung am größten ist und sich mit zunehmendem Abstand von der Elektrodenanordnung entlang des Einlaufbereiches und des Auslaufbereiches verringert.

Bei einer bevorzugten alternativen Weiterbildung ist die Stirnfläche des Segmentes konvex gekrümmt, wobei zumindest ein Abschnitt der Stirnfläche eine derartige Krümmung aufweist, dass der Krümmungsradius im Wesentlichen mit dem zwischen der Stirnfläche und der Drehachse definierten Schwenkradius zusammenfällt.

Vorzugsweise ist die Stirnfläche mindestens eines Segmentes mit einem Klemmeingriffsabschnitt versehen, der für einen klemmenden Eingriff der Anordnung der zu verbindenden Materialbahnen ausgebildet ist. Während einer Bewegung des mindestens einen Segmentes wird der klemmende Eingriff durch den Klemmeingriffsabschnitt temporär erzeugt. Dabei wird der Abstand zwischen den einander gegenüberliegenden Stirnflächen der Segmente auf einen Betrag reduziert, der bevorzugt etwas geringer ist als die Dicke der Anordnung der zu verbindenden Materialbahnen. Der Klemmeingriffsabschnitt dient insbesondere dazu, eine Abtrennung des bei Verbindung der beiden Materialbahnen entstandenen Nachspanns der ablaufenden Materialbahn sowie ein Abtrennen des bei Verbindung der Materialbahnen entstandenen Vorspanns der zulaufenden neuen Materialbahn zu bewirken oder zumindest zu unterstützen, indem die miteinander verbundenen Materialbahnen durch den klemmenden Eingriff zumindest kurzzeitig festgehalten werden.

Bei einer bevorzugten Weiterbildung dieser Ausführung ist der Klemmeingriffsabschnitt an der Stirnfläche des Segmentes in Bezug auf die Bewegungsrichtung der Anordnung der zu verbindenden Materialbahnen stromabwärts von der Elektrodenanordnung vorgesehen.

Bei einer weiteren bevorzugten Weiterbildung lässt sich der Klemmeingriffsabschnitt dadurch realisieren, dass er eine konvexe Krümmung aufweist, deren Krümmungsradius größer als der zwischen der Stirnfläche und der Drehachse definierte Schwenkradius ist.

Bei einer besonders bevorzugten Ausführung sind beide Segmente bewegbar gelagert, sodass für diese Ausführung die hier beschriebenen konstruktiven Aspekte, sofern sie zumindest die Bewegbarkeit betreffen, für beide Segmente gelten können.

Eine weitere bevorzugte Ausführung weist eine Schwächungseinrichtung auf, die ausgebildet ist, im Anfangsabschnitt der zulaufenden neuen Materialbahn und stromaufwärts von dieser im Endabschnitt der ablaufenden Materialbahn jeweils eine geschwächte Stelle, insbesondere in Form einer winklig oder quer zur Bewegungsrichtung der Materialbahnen orientierten Einkerbung oder einer Rändelung oder mindestens eines Loches oder einer Perforation oder eines Einschnittes oder einer Einschnürung (, wobei der Einschnitt oder die Einschnürung wahlweise in Richtung der Dicke oder an mindestens einer Seite der Anordnung der zu verbindenden Materialbahnen ausgebildet wird), zu erzeugen. Die Erzeugung einer solchen geschwächten Stelle oder Schwächung dient dazu, das Vorspannmaterial und das Nachspannmaterial an einer definierten Stelle zu schwächen, um dort im nachfolgenden Prozess eine Trennung durch Abreißen einfach unter Einfluss einer dann entsprechend einzustellenden Über- oder Untergeschwindigkeit zu bewirken, wodurch ein sauber definierter Vor- und Nachspannabriss ohne Messereinsatz entsteht.

Bei einer bevorzugten Weiterbildung ist die Schwächungseinrichtung in Bezug auf die Bewegungseinrichtung der Materialbahnen stromaufwärts vor der Anordnung der Segmente vorgesehen.

Bei einer weiteren bevorzugten Weiterbildung ist die Schwächungseinrichtung so ausgebildet und/oder wird von der Steuerungseinrichtung so gesteuert, dass die geschwächte Stelle im Endabschnitt der ablaufenden Materialbahn in Bezug auf die Bewegungsrichtung der Materialbahnen stromaufwärts von der im Anfangsabschnitt der zulaufenden neuen Materialbahn ausgebildeten geschwächten Stelle erzeugt wird, wobei die durch die Elektroschweißeinrichtung zwischen den Materialbahnen erzeugte Verbindungsstelle zwischen den beiden geschwächten Stellen liegt.

Bei einer alternativen Weiterbildung weist die Schwächungseinrichtung ein, vorzugsweise als Vorsprung ausgebildetes, erstes Schwächungselement, das in Bezug auf die Bewegungsrichtung der Materialbahnen stromabwärts nach der Elektrodenanordnung an der Stirnfläche des einen Segmentes angeordnet und zur Erzeugung einer geschwächten Stelle im Anfangsabschnitt der zulaufenden neuen Materialbahn vorgesehen ist, und ein, vorzugsweise als Vorsprung ausgebildetes, zweites Schwächungselement auf, das in Bezug auf die Bewegungsrichtung der Materialbahnen stromaufwärts vor der Elektrodenanordnung an der Stirnfläche des anderen Segmentes angeordnet und zur Erzeugung einer geschwächten Stelle im Endabschnitt der ablaufenden Materialbahn vorgesehen ist. Diese alternative Weiterbildung hat den Vorteil, dass die Schwächungseinrichtung sozusagen in die Segmente integriert ist und dadurch die Verwendung einer weiteren separaten Baugruppe entfällt.

Die Schwächungselemente können sich grundsätzlich über die gesamte Breite der Materialbahn erstrecken. Alternativ ist es aber auch denkbar, die Schwächungselemente so zu gestalten, dass sie die Materialbahn nicht über deren gesamte Breite, sondern nur in einem bestimmten Abschnitt, in bestimmten Bereichen oder an bestimmten Stellen schwächen oder durchtrennen bzw. perforieren und demgegenüber in den übrigen Bereichen die Materialbahn unberührt lassen und dort somit keine Schwächung erzielen. Ferner können die Schwächungselemente auch als spitze Schneide oder mit einer spitzen Schneide ausgebildet sein, wodurch sich die Schwächungswirkung noch verstärken oder bereits eine im Wesentlichen vollständige Durchtrennung der Materialbahn realisieren lässt.

Ferner kann die Schwächungseinrichtung bevorzugt so ausgebildet sein, dass der Abstand der im Anfangsabschnitt der zulaufenden neuen Materialbahn ausgebildeten geschwächten Stelle von der durch die Elektroschweißeinrichtung zwischen den Materialbahnen erzeugten Verbindungsstelle geringer ist als der Abstand der Verbindungsstelle von der im Endabschnitt der ablaufenden Materialbahn erzeugten geschwächten Stelle. Der Vorteil dieser Weiterbildung besteht insbesondere darin, das den Rest des Vorspanns bildende vorlaufende Ende der zulaufenden neuen Materialbahn möglichst kurz zu halten, um dadurch zu verhindern, dass dieses vorlaufende Ende sich abhebt oder hervorsteht, was ansonsten den weiteren Produktionsablauf stören könnte.

Eine weitere bevorzugte Ausführung weist eine erste Aussonderungseinrichtung, die in Bezug auf die Bewegungsrichtung der Materialbahnen stromabwärts vor der Anordnung der Segmente vorgesehen und ausgebildet ist, den vorlaufenden Anfangsabschnitt der zulaufenden neuen Materialbahn auszusondern, und eine zweite Aussonderungseinrichtung auf, die in Bezug auf die Bewegungsrichtung der Materialbahnen stromaufwärts vorgesehen und ausgebildet ist, den nachlaufenden Endabschnitt der ablaufenden Materialbahn auszusondern, wobei die Steuerungseinrichtung zur Steuerung der beiden Aussonderungseinrichtungen derart ausgebildet ist, dass zumindest temporär in der ersten Aussonderungseinrichtung der vorlaufende Anfangsabschnitt der zulaufenden neuen Materialbahn mit einer Bewegungsgeschwindigkeit transportiert wird, die höher als die Bewegungsgeschwindigkeit der Materialbahnen im Bereich der Arbeitsstellung der Segmente ist, und in der zweiten Aussonderungseinrichtung der nachlaufende Endabschnitt der ablaufenden Materialbahn mit einer Bewegungsgeschwindigkeit transportiert wird, die geringer als die Bewegungsgeschwindigkeit der Materialbahnen im Bereich der Arbeitsstellung der Segmente ist. Diese Aussonderungseinrichtungen sorgen somit für einen Abriss bzw. eine Trennung des Vorspanns bzw. des Nachspanns mittels Übergeschwindigkeit bzw. Untergeschwindigkeit von der zugehörigen Materialbahn. Bevorzugt weist die erste Aussonderungseinrichtung einen Vorspannwickler und die zweite Aussonderungseinrichtung einen Nachspannwickler auf.

Die Materialbahnen können bevorzugt über eine oder mehrere Führungsrollen geführt werden. Während des Betriebes kann es vorkommen, dass sich während der Bewegung der Materialbahn die Bahnspannung abrupt ändert und dann ggf. zeitweise sogar keine Bahnspannung mehr vorhanden ist. Dies ist beispielsweise der Fall, wenn prozessbedingt die Materialbahn auf der einen Seite einer Führungsrolle abgeschnitten und auf der anderen Seite dieser Rolle gezogen wird. Dies ist insbesondere beim Verbinden von zwei Materialbahnen der Fall. Dabei besteht die Gefahr, dass in diesem Moment die Materialbahn, insbesondere wenn sie eine relativ hohe Steifigkeit besitzt, trotz vorhandener seitlicher Führungen von der Führungsrolle abspringt. Um die Gefahr zu verringern oder gar zu vermeiden, böte sich als eine Lösung an, benachbart zum Umfang der Rolle eine Führung, eine Halterung, ein Blech oder ein Schutzelement vorzusehen, was aber den Nachteil hätte, dass die Materialbahn viel schlechter über die Rolle eingefädelt werden kann. Wenn die Materialbahn ferromagnetisches Material aufweist bzw. aus einem Metallstreifen besteht, kann vorzugsweise mindestens eine Führungsrolle verwendet werden, die entlang des Umfanges zumindest abschnittsweise magnetisches Material aufweist, das vorzugsweise aus diskreten Magnetelementen gebildet wird. Der Vorteil einer solchen Führungsrolle, deren Umfang magnetisch ist, besteht nicht nur darin, dass die ferromagnetisches Material aufweisende Materialbahn nicht mehr von der Führungsrolle springen kann, sondern des Weiteren darin, dass das Einfädeln der Materialbahn nicht beeinträchtigt wird.

Vorzugsweise ist mindestens eine Tänzeranordnung vorgesehen, die eine stationäre mehrbahnige Rollenanordnung und eine bewegliche mehrbahnige Rollenanordnung aufweist, wobei die beiden Rollenanordnungen um eine halbe Bahnbreite zueinander versetzt angeordnet sind und die Materialbahn zwischen den beiden Rollenanordnungen nach Art eines Flaschenzuges geführt ist. Die mehrbahnigen Rollenanordnungen können jeweils als Gruppe von koaxial zueinander angeordneten, jeweils einbahnigen Rollen ausgebildet sein. Alternativ ist es aber auch denkbar, anstelle von zu einer mehrbahnigen Gruppe zusammengefassten und koaxial zueinander angeordneten, jeweils einbahnigen Rollen eine entsprechende mehrbahnige Rolle zu verwenden. Die bewegliche mehrbahnige Rollenanordnung wird gegenüber der stationären mehrbahnigen Rollenanordnung so beaufschlagt, dass die Materialbahn mit ihren Trums zwischen den beiden Rollenanordnungen gespannt wird. Hierzu ist bevorzugt die bewegliche mehrbahnige Rollenanordnung am freien Ende eines beweglichen Tänzerarmes gelagert, welcher in seiner Drehstellung beeinflussbar ist, und zwar vorzugsweise durch einen Elektromotor oder eine Federeinrichtung. Zwar ist eine Tänzeranordnung grundsätzlich bekannt und wird primär zur Steuerung der Bahnspannung verwendet. Der Vorteil einer Tänzeranordnung gemäß dem zuvor beschriebenen Ausführungsbeispiel besteht in ihrer zusätzlichen Funktion als Speicher, da aufgrund der Flaschenzug-Anordnung auf verhältnismäßig kleinem Raum ein relativ langer Abschnitt der Materialbahn und somit relativ viel Material gespeichert werden kann.

Wenn eine Materialbahn wie insbesondere ein Metallstreifen zur Herstellung von "heat-not-burn"-Produkten nur eine relativ geringe Breite besitzt, ist sie zur Bildung einer Bobine auf dem zugehörigen Bobinenkern bevorzugt in einer reziprok oszillierenden Anordnung ähnlich wie bei einer Garnrolle aufgewickelt. Um bei Bobinen aus einer breiten Materialbahn, die Lage über Lage wie bei einer Toilettenrolle aufgewickelt ist, den richtigen Zeitpunkt zum Wechseln der Bobine mit möglichst wenig Restmaterial auf dem Bobinenkern zu bestimmen, wird mit Hilfe der Geschwindigkeit der abgezogenen Materialbahn und der Drehzahl der ablaufenden Bobine der augenblickliche Durchmesser dieser Bobine relativ genau berechnet, da sich keine Markierung kurz vor dem Ende auf der Materialbahn befindet, welche optisch erkannt werden könnte. Bei dem zuvor angesprochenen Winkelschema nach Art einer Garnrolle führt jedoch eine solche Berechnung zwangsläufig dazu, dass sich noch ein verhältnismäßig großer Anteil der Materialbahn auf dem Bobinenkern befindet, bevor deren Ende erreicht ist. Deshalb wird erfindungsgemäß vorgeschlagen, einen oder mehrere Sensoren zu verwenden, die mit Hilfe von Messstrahlen den Bobinenkern bzw. die noch auf dem Bobinenkern befindliche Restlänge der Materialbahn abzutasten. Aus den Messsignalen dieser Sensoren lässt sich dann ermitteln, mit wieviel Umschlingungen sich noch eine Restlänge der Materialbahn auf dem Bobinenkern befindet, um daraus den exakten Zeitpunkt zum Wechsel der Bobine zu ermitteln und somit den Wechsel der Bobine dann zeitgenau einzuleiten. Bevorzugt sollten optische Sensoren verwendet werden. Alternativ ist aber auch der Einsatz eines Kamerasystems denkbar.

Ferner kann bevorzugt eine Bahntrenneinrichtung vorgesehen sein, die Schneidmittel zum Durchschneiden der Materialbahn und einen in Förderrichtung der Materialbahn stromabwärts gelegenen, schwenkbar gelagerten Hebel, an dessen freiem Ende ein Führungselement, bevorzugt eine Rolle, zum Führen der Materialbahn vorgesehen ist, aufweist, wobei die Schneidmittel mit dem Hebel so gekoppelt sind, dass durch eine Schwenkbewegung des Hebels die Schneidmittel zum Durchtrennen der Materialbahn aktiviert werden. Eine solche Bahntrenneinrichtung sollte aus Sicherheitsgründen vorgesehen werden, um zu verhindern, dass die Bahnspannung in der Materialbahn einen vorbestimmten kritischen Wert, beispielsweise in Folge einer Fehlfunktion, überschreitet. Hierzu ist die Bahntrenneinrichtung derart ausgestaltet, dass sie beim Überschreiten der Bahnspannung automatisch eine Durchtrennung der Materialbahn bewirkt. Dies wird erfindungsgemäß dadurch erreicht, dass mit ansteigender Bahnspannung das Führungselement von der Materialbahn mit einer stärker werdenden Kraft beaufschlagt wird, welche dann bei Überschreiten der Bahnspannung eine Schwenkbewegung des Hebels auslöst, wodurch wiederum die Schneidmittel zum Durchtrennen der Materialbahn aktiviert werden mit der Folge, dass die Materialbahn durchtrennt wird.

Bevorzugt lässt sich das Einfädeln der Materialbahn mit Hilfe eines Hilfswerkzeuges vereinfachen, das einen länglichen Körper aufweist, an dessen einem Ende die Materialbahn für den Einfädelvorgang in Eingriff bringbar ist. Bei einer bevorzugten Weiterbildung dieser Ausführung sind am besagten Ende des länglichen Körpers zwei relativ zueinander bewegliche Klemmstücke vorgesehen, um zwischen sich die einzufädelnde Materialbahn einzuklemmen. Bei einer weiteren bevorzugten Weiterbildung dieser Ausführung ist am besagten Ende des länglichen Körpers das eine Klemmstück fest und das andere Klemmstück beweglich angeordnet. Sofern die Materialbahn ferromagnetisches Material enthält, kann bei einer weiteren bevorzugten Weiterbildung dieser Ausführung die Eingriffs- bzw. Klemmfläche mindestens eines der beiden Klemmstücke magnetisches Material aufweisen.

Schließlich schlägt die Erfindung eine Vorrichtung mit einer ersten Vorrichtung nach mindestens einem der Ansprüche und einer in Bezug auf die Bewegungsrichtung der Materialbahnen stromabwärts vorgesehenen zweiten Vorrichtung vor, die zur Verbindung eines nach Abtrennung eines vorlaufenden Anfangsabschnittes gebildeten vorlaufenden Endes der zulaufenden neuen Materialbahn mit der ablaufenden Materialbahn vorgesehen und im Übrigen nach mindestens einem der Ansprüche ausgebildet ist. Demnach wird die zuvor beschriebene Vorrichtung sozusagen verdoppelt, wobei die nachgeschaltete zweite Vorrichtung dazu dient, das vorlaufende Ende der zulaufenden neuen Materialbahn an die Materialbahn anzuheften, wodurch auf besonders sichere Weise verhindert wird, dass dieses vorlaufende Ende sich abhebt oder hervorsteht, was ansonsten den weiteren Produktionsablauf stören könnte.

Nachfolgend werden bevorzugte Ausführungsbeispiele der Erfindung anhand der beiliegenden Zeichnungen näher erläutert. Es zeigen:
- Figur 1: eine schematische Seitenansicht einer Vorrichtung zum Bereitstellen und Verbinden von Metall aufweisenden Materialbahnen in einer ersten Ausführung (a), einer zweiten Ausführung (b) und einer dritten Ausführung (c);
- Figuren. 2a bis e: eine schematische Seitenansicht einer in der Vorrichtung von Figur 1 verwendeten Verbindungseinheit gemäß einer ersten Ausführung in verschiedenen Betriebszuständen;
- Figuren 3a bis f: eine schematische Seitenansicht einer in der Vorrichtung von Figur 1 verwendeten Verbindungseinheit gemäß einer zweiten Ausführung in verschiedenen Betriebszuständen;
- Figur 4: eine vergrößerte perspektivische Einzelansicht einer Führungsrolle der in der Vorrichtung gemäß Figur 1 verwendeten Art gemäß einem bevorzugten Ausführungsbeispiel;
- Figur 5: eine schematische perspektivische Ansicht einer in der Vorrichtung von Figur 1 verwendeten Tänzeranordnung gemäß einem bevorzugten Ausführungsbeispiel;
- Figur 6: eine schematische perspektivische Ansicht einer Einrichtung zur Restmaterialerkennung an einer Bobine gemäß einem bevorzugten Ausführungsbeispiel;
- Figur 7: eine schematische Ansicht einer in der Vorrichtung von Figur 1 zu verwendenden Bahntrenneinrichtung in einem nicht ausgelösten Zustand (a) und in einem ausgelösten Zustand (b) gemäß einem bevorzugten Ausführungsbeispiel; und
- Figur 8: eine schematische Seitenansicht eines Hilfswerkzeuges zum Einfädeln eines neuen Metallstreifens im Längsschnitt gemäß einem bevorzugten Ausführungsbeispiel.

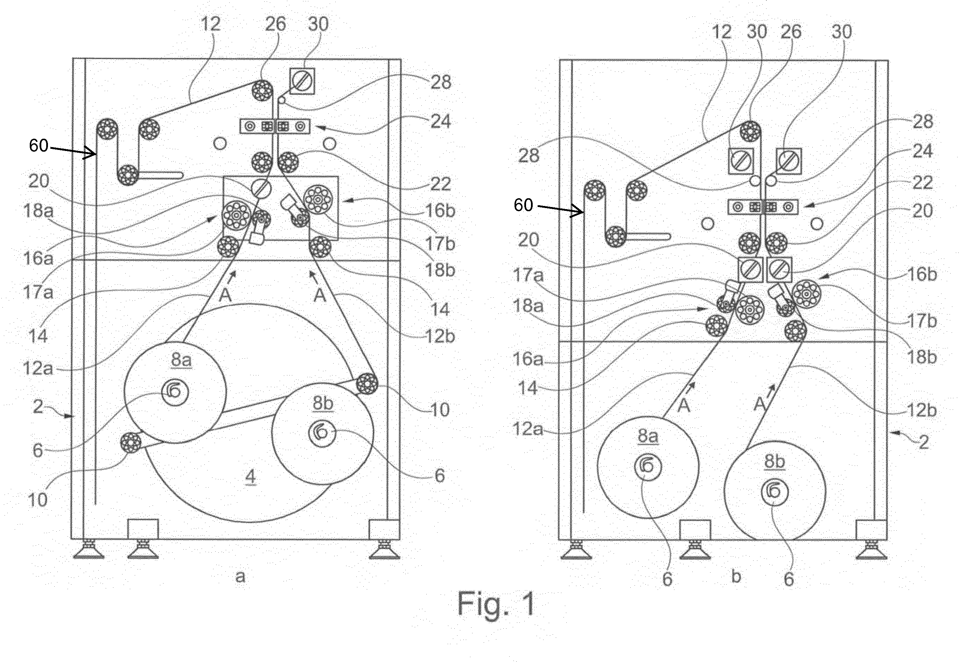

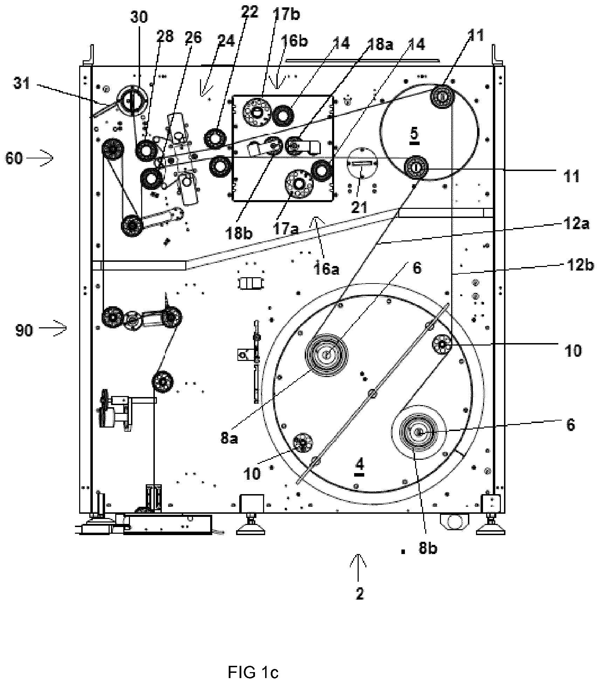

In Figur 1a ist schematisch in Seitenansicht eine Vorrichtung zum Bereitstellen und Verbinden von Metall aufweisenden Materialbahnen dargestellt. Diese Vorrichtung weist eine Materialbahnbereitstellungseinrichtung 2 auf, in der gemäß der in Figur 1a gezeigten Ausführung ein Drehteller 4 drehbar gelagert ist. Auf dem Drehteller 4 sind in einem diametralen Abstand voneinander zwei Lagerdorne 6 angeordnet, die parallel zu der in den Figuren nicht gezeigten Drehachse des Drehtellers 4 orientiert sind. Die Lagerdorne 6 dienen zur lösbaren Aufnahme von Bobinen, die in Figur 1 mit dem Bezugszeichen "8a" und "8b" gekennzeichnet sind. Ferner sind am Drehteller 4 noch zwei diametral gegenüberliegende Leitrollen 10 angeordnet, deren Drehachsen parallel zur Drehachse des Drehtellers 4 orientiert sind.

Im dargestellten Ausführungsbeispiel enthalten die Bobinen 8a und 8b jeweils einen aufgewickelten Metallstreifen 12a bzw. 12b. Die Bobinen 8a, 8b sind an den Lagerdornen 6 drehbar gelagert, um den Metallstreifen 12a bzw. 12b abziehen zu können. Bevorzugt hat der verwendete Metallstreifen eine Breite von 4 mm und eine Dicke von etwa 0,05 bis 0,06 mm. Selbstverständlich ist anstelle eines solchen relativ schmalen und dünnen sowie geschlossenen Metallstreifens die Verwendung aller möglichen anderen Metall aufweisenden Materialbahnen, insbesondere mit unterschiedlicher Breite wie beispielsweise 2 bis 30 mm, 3 bis 28 mm, 3,5 bis 6,5 mm, 4 bis 6 mm, 15 bis 25 mm, 15 bis 22 mm, 15 bis 18 mm oder 22 bis 25 mm und/oder mit unterschiedlicher Dicke wie beispielsweise 20 bis 500 µm, 40 bis 70µm, 80 bis 120 µm oder 150 bis 250 µm und/oder in Form eines perforierten oder netz- oder gitterförmigen Streifens, grundsätzlich denkbar.

Wenn die bisher benutzte "alte" Bobine droht leerzulaufen, muss auf eine "neue" Bobine gewechselt werden, wobei dieser Wechsel ohne Unterbrechung des Prozesses und somit sozusagen nahtlos stattzufinden hat. In Figur 1a handelt es sich beispielhaft bei der links dargestellten Bobine 8a um die alte Bobine, von der der ablaufende (und dann langsam zur Neige gehende) alte Metallstreifen 12a abgezogen wird, und bei der rechts dargestellten Bobine 8b um die neue Bobine, die den zulaufenden neuen Metallstreifen 12b bereitstellt. Im Zuge des Wechsels von der alten Bobine 8a und somit vom alten Metallstreifen 12a auf die neue Bobine 8b und somit den neuen Metallstreifen 12b wird der Drehteller 4 einer Drehbewegung in der Ansicht von Figur 1a entgegen des Uhrzeigersinns unterworfen, wodurch die neue Bobine 8b die Position der alten Bobine 8a übernimmt und die alte Bobine 8a auf die Position der neuen Bobine 8b verbracht wird, um dort gegen eine weitere neue Bobine ausgewechselt zu werden, die dann auf den Lagerdorn 6 aufgesetzt wird. Wie Figur 1a des Weiteren erkennen lässt, dient die benachbart zur neuen Bobine 8b befindlichen Leitrolle 10 dazu, den neuen Metallstreifen 12b für den nachfolgenden, noch zu beschreibenden Prozess entsprechend korrekt zu führen. Während der Drehbewegung des Drehtellers 4 gelangt dann der neue Metallstreifen 12b außer Eingriff von der Leitrolle 10 und erhält die gleiche Orientierung wie zuvor der alte Metallstreifen 12a.

Da die Breite der Bobinen 8a, 8b zwischen ihren (in den Figuren nicht dargestellten) beidseitigen Bordscheiben in der Regel ein Vielfaches der Breite des aufgewickelten Metallstreifens beträgt, sind in Bezug auf die Bewegungsrichtung der Metallstreifen 12a, 12b stromabwärts zwei quer zur Bewegungsrichtung der Metallstreifen 12a, 12b beweglich gelagerte Führungsrollen 14 vorgesehen, die die Aufgabe einer Zentriereinrichtung übernehmen, um anschließend die Metallstreifen 12a, 12b in einer definierten Orientierung für den weiteren nachfolgenden Prozess zu führen.

In Bezug auf die Bewegungsrichtung der Metallstreifen 12a, 12b gemäß den in Figur 1 dargestellten Pfeilen A stromabwärts sind eine erste Schwächungseinrichtung 16a für den ablaufenden alten Metallstreifen 12a und eine zweite Schwächungseinrichtung 16b für den zulaufenden neuen Metallstreifen 12b vorgesehen. Im dargestellten Ausführungsbeispiel weist die erste Schwächungseinrichtung 16a eine Eingriffswalze 17a und eine in Richtung auf die Eingriffswalze 17a vorgespannte Andrückwalze 18a auf, wobei zwischen diesen beiden Walzen 17a, 18a der ablaufende alte Metallstreifen 12a geführt wird. In gleicher Weise weist die zweite Schwächungseinrichtung 16b eine Eingriffswalze 17b und eine Andrückwalze 18b auf, wobei ebenfalls zwischen diesen beiden Walzen 17b, 18b der zulaufende neue Metallstreifen 12b geführt wird. Die Eingriffswalzen 17a, 17b der beiden Schwächungseinrichtungen 16a, 16b sind, bevorzugt nach Art einer Prägewalze, so ausgebildet, dass sie im jeweiligen Metallstreifen 12a, 12b eine geschwächte Stelle, insbesondere in Form einer winklig oder quer zur Bewegungsrichtung der Metallstreifen 12a, 12b orientierten Einkerbung oder einer Rändelung oder mindestens eines Loches oder einer Perforation oder eines Einschnittes oder einer Einschnürung, erzeugt. Weitere Einzelheiten hinsichtlich der Funktion dieser beiden Schwächungseinrichtungen 16a, 16b werden an späterer Stelle in dieser Beschreibung näher erläutert.

Des Weiteren weist die Vorrichtung einen Nachspannwickler 20 auf, der dazu dient, einen verbleibenden Rest des ablaufenden alten Metallstreifens 12a aus dem Prozess auszusondern und aufzuwickeln.

In Bewegungsrichtung der Metallstreifen 12a, 12b betrachtet, ist stromabwärts ein Paar von weiteren Führungsrollen 22 und stromabwärts von diesen eine Verbindungseinheit 24 vorgesehen. Die Führungsrollen 22 dienen dazu, die Metallstreifen 12a, 12b in einer definierten Orientierung zur Verbindungseinheit 24 zu führen.

Die Verbindungseinheit 24 hat die Aufgabe, an den ablaufenden alten Metallstreifen 12a den zulaufenden neuen Metallstreifen 12b anzuheften. Die Verbindungseinheit 24 wird nachfolgend noch im Einzelnen näher beschrieben.

In Bezug auf die Bewegungsrichtung der Metallstreifen 12a, 12b stromabwärts von der Verbindungseinheit 24 ist eine Führungsrolle 26 angeordnet, um den dann einzigen Metallstreifen 12 zu weiteren Prozessen in nachfolgenden (nicht dargestellten) Stationen zu transportieren.

Ebenfalls stromabwärts von der Verbindungseinheit 24 ist eine weitere Führungsrolle 28 angeordnet, um einen vom zulaufenden neuen Metallstreifen 12b abzutrennenden Vorspann zu einem Vorspannwickler 30 zu leiten, der vorgesehen ist, den Vorspann aufzuwickeln und somit aus dem Prozess auszusondern.

Die in Figur 1b dargestellte Ausführung unterscheidet sich von der Ausführung gemäß Figur 1a dadurch, dass der Drehteller 4 mit den Führungsrollen 10 nicht vorgesehen ist, sondern stattdessen die Lagerdorne 6 stationär angeordnet sind, sodass der Austausch der Bobinen hinsichtlich der Position immer alternierend stattfindet. Da im Gegensatz zur Ausführung von Figur 1a hinsichtlich der Orientierung und des Bahnverlaufes nicht mehr zwischen ablaufendem altem Metallstreifen 12a und zulaufendem neuem Metallstreifen 12b differenziert wird, unterscheidet sich die Ausführung von Figur 1b von der Ausführung gemäß Figur 1a des Weiteren dadurch, dass für jeden Metallstreifen 12a, 12b ein Nachspannwickler 20 und ein Vorspannwickler 30 und somit ein Paar von Nachspannwicklern 20 und ein Paar von Vorspannwicklern 30 vorgesehen sind. Im Übrigen entspricht die Konstruktion der Ausführung gemäß Figur 1b der Konstruktion der Ausführung gemäß Figur 1a, sodass zur Vermeidung von Wiederholungen insoweit auf die zuvor erfolgte Beschreibung der Ausführung von Figur 1a verwiesen wird.

Die in Figur 1c dargestellte Ausführung unterscheidet sich von der Ausführung gemäß Figur 1a dadurch, dass stromabwärts von dem die Bobinen 8a, 8b tragenden Drehteller 4 ein zusätzlicher Drehteller 5 angeordnet ist, der zwei diametral gegenüberliegende Leitrollen 11 trägt, über die jeweils einer der beiden Metallstreifen 12a, 12b geführt und in Richtung auf die Schwächungseinrichtungen 16a, 16b umgelenkt wird. Die Drehachsen des zusätzlichen Drehtellers 5 und deren Leitrollen 11 sind parallel zur Drehachse des Drehtellers 4 orientiert. Da die Metallstreifen 12a, 12b zur Bildung der zugehörigen Bobine 8a bzw. 8b aufgrund ihrer geringen Breite bevorzugt in einer reziprok oszillierenden Anordnung ähnlich wie bei einer Garnrolle aufgewickelt sind, werden sie beim Abwickeln einer in axialer Richtung orientierten, reziproken Oszillation unterworfen. Diese Oszillation lässt sich besonders vorteilhaft entlang eines längeren Weges beseitigen, der durch die Anordnung des zusätzlichen Drehtellers 5 entsteht, um die Metallstreifen 12a, 12b vor Eintritt in die Schwächungseinrichtungen 16a, 16b in einen ruhigen Geradeauslauf zu überführen. Ein weiterer Unterschied zur Ausführung gemäß Fig. 1a besteht darin, dass der Nachspannwickler entfällt und stattdessen zwischen dem zusätzlichen Drehteller 5 und den Schwächungseinrichtungen 16a, 16b ein, vorzugsweise plättchenförmig ausgebildetes, Magnetelement 21 angeordnet ist, der das vorlaufende Ende eines verbleibenden Restes des ablaufenden alten Metallstreifens 12a kurzzeitig fixiert, bevor die alte Bobine 8a dann einer entgegengesetzten Rotation unterworfen wird, um den den Nachspann bildenden, verbleibenden Rest des alten Metallstreifens 12a aufzuwickeln, und anschließend vom zugehörigen Lagerdorn abgenommen wird, um für eine neue Bobine Platz zu machen. Diese Maßnahme eignet sich natürlich nur für den Fall, dass die Metallstreifen 12a, 12b ferromagnetisches Material aufweisen, was aber bevorzugt der Fall ist. In gleicher Weise kann auch der Vorspannwickler 30 magnetisches Material bzw. ein Magnetelement aufweisen, um auf einfache und zugleich besonders wirkungsvolle Weise das den Vorspann bildende vorlaufende Ende des neuen Metallstreifens 12b zu fixieren. Wie Figur 1c ferner erkennen lässt, ist benachbart zum Vorspannwickler 30 ein zusätzliches Magnetelement 31 angeordnet, an dem nach einer Drehbewegung des Vorspannwickler 30 das vorlaufende Ende des neuen Metallstreifens 12b anhaftet. Mit diesen konstruktiven Maßnahmen unter Verwendung von Magnetkräften lässt sich das Einfädeln des vorlaufenden Endes bzw. Vorspanns des neuen Metallstreifens 12b vereinfachen. Im Übrigen entspricht die Konstruktion der Ausführung gemäß Figur 1c im Wesentlichen der Konstruktion der Ausführung gemäß Figur 1a, so dass zur Vermeidung von Wiederholungen insoweit auf die zuvor erfolgte Beschreibung der Ausführung von Figur 1a verwiesen wird.

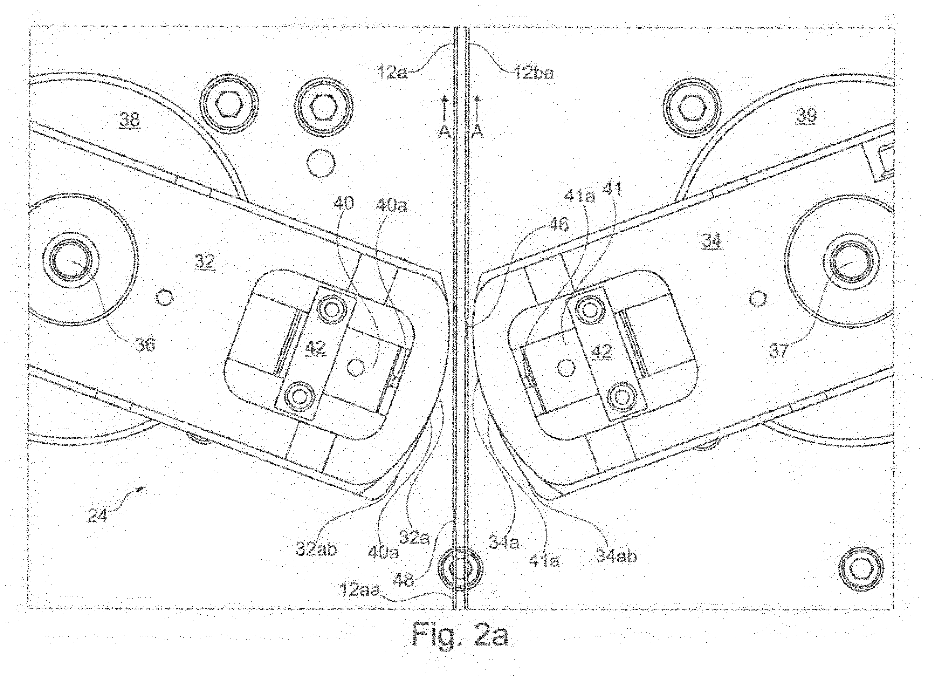

In den Figuren 2a bis e ist die Verbindungseinheit 24 gemäß einer ersten bevorzugten Ausführung im Einzelnen gezeigt, und zwar in unterschiedlichen Betriebszuständen. Die Verbindungseinheit 24 weist eine Anordnung aus zwei Segmenten 32, 34 auf, die unter Bildung eines Zwischenraumes zur Aufnahme einer Anordnung der übereinanderliegenden, zu verbindenden Metallstreifen 12a, 12b voneinander beanstandet sind und jeweils eine Stirnfläche 32a bzw. 34a aufweisen. Beide Segmente 32, 34 sind im dargestellten Ausführungsbeispiel um eine Drehachse 36 bzw. 37 drehbar gelagert. Die beiden Drehachsen 36, 37 sind parallel zueinander sowie zu einer von den Metallstreifen 12a, 12b aufgespannten Ebene sowie im Wesentlichen rechtwinklig zur Bewegungsrichtung der Metallstreifen 12a, 12b gemäß Pfeil A orientiert. Den Segmenten 32, 34 ist jeweils ein Antrieb 38 bzw. 39 zugeordnet, der das zugehörige Segment 32 bzw. 34 in eine Schwenkbewegung versetzt.

Wie die Figuren 2a bis e des Weiteren erkennen lassen, sind die Stirnflächen 32a, 34a der Segmente 32, 34 konvex gekrümmt. Dabei liegen die gekrümmten Stirnflächen zumindest abschnittsweise in einer virtuellen gekrümmten Ebene, zu der die Drehachsen 36, 37 parallel verlaufen. Die Stirnflächen 32a, 34a sind jeweils in einen in Bezug auf die Bewegungsrichtung A der Metallstreifen 12a, 12b vorlaufenden Abschnitt 32aa bzw. 34aa und einen nachlaufenden Abschnitt 32ab bzw. 34ab unterteilt. Im dargestellten Ausführungsbeispiel ist die Stirnfläche 32a bzw. 34a der Segmente 32, 34 zumindest im Bereich ihres vorlaufenden Abschnittes 32aa bzw. 34aa, der auch als Einlaufbereich bezeichnet werden kann, mit einer derartigen Krümmung versehen, dass der Krümmungsradius mit dem Schwenkradius zusammenfällt, der zwischen diesem Abschnitt 32aa bzw. 34aa der Stirnfläche 32a bzw. 34a und der Drehachse 36 bzw. 37 definiert ist. Wie die Figuren 2a bis e des Weiteren erkennen lassen, ist zwar an den Stirnflächen 32a, 34a der Segmente 32, 34 auch der nachlaufende Abschnitt 32ab bzw. 34ab, der auch als Auslaufbereich bezeichnet wird, gekrümmt, weist jedoch eine derartige konvexe Krümmung auf, dass der Krümmungsradius größer ist als der zuvor erwähnte Schwenkradius. Aufgrund einer solchen Ausbildung, wonach die Krümmung schwächer ist, übernimmt der nachlaufende Abschnitt 32ab bzw. 34ab der Stirnflächen 32a, 34a der Segmente 32, 34 die Aufgabe eines Klemmeingriffsabschnittes, wodurch die Anordnung der zu verbindenden Metallstreifen 12a, 12b für einen beidseitigen klemmenden Eingriff durch die Segmente 32, 34 unterworfen wird. Dabei sorgt die geringe Krümmung dafür, dass der Abstand zwischen den einander gegenüberliegenden Stirnflächen 32a, 34a der Segmente 32, 34 im Bereich der nachlaufenden Abschnitte 32ab, 34ab auf einen Betrag reduziert wird, der etwas geringer als die Dicke der Anordnung der zu verbindenden Metallstreifen 12a, 12b ist. Weitere Einzelheiten im Zusammenhang mit der Funktion dieser nachlaufenden Abschnitte 32ab, 34ab der Stirnfläche 32a, 34a der Segmente 32, 34 werden nachfolgend an späterer Stelle näher erläutert.

Wie die Figuren 2a bis e ferner erkennen lassen, enthält jedes Segment 32, 34 eine Schweißelektrode 40 bzw. 41, wobei eine dieser Schweißelektroden 40, 41 die Anode und die andere dieser Schweißelektroden 40, 41 die Kathode bildet. Wie die Figuren 2a bis e des Weiteren erkennen lassen, sind die Schweißelektro-den 40, 41 in einer Aussparung innerhalb der Segmente 32, 34 angeordnet und weisen eine Elektrodenspitze 40a bzw. 41a auf, die zur Stirnfläche 32a bzw. 34a des jeweiligen Segmentes 32 bzw. 34 geführt ist und dort mit ihrem Ende freiliegt. Gegebenenfalls kann das Ende der Elektrodenspitze 40a bzw. 41a nach Art eines Vorsprunges auch geringfügig von der Stirnfläche 32a bzw. 34a der Segmente 32, 34 abstehen. Im dargestellten Ausführungsbeispiel liegen die Elektrodenspitze 40a, 41a etwa in der Mitte zwischen dem vorlaufenden Abschnitt 32aa bzw. 34aa und dem nachlaufenden Abschnitt 32ab bzw. 34ab der Stirnflächen 32a, 34a der Segmente 32, 34.

Im Gegensatz zu den Darstellungen in den Figuren kann alternativ der vorlaufende Abschnitt 32aa bzw. 34aa und der nachlaufende Abschnitt 32ab bzw. 34ab der Stirnflächen 32a, 34a im Wesentlichen als ebene Flächen ausgebildet und derart zueinander angewinkelt sein, dass der Abstand der Stirnflächen 32a, 34a von der jeweiligen Drehachse 36 bzw. 37 der Segmente 32, 34 im Bereich der Elektrodenspitze 40a bzw. 41a am größten ist und sich mit zunehmendem Abstand von der Elektrodenspitze 40a bzw. 41a entlang des vorlaufenden Abschnittes 32aa bzw. 34aa und des nachlaufenden Abschnittes 32ab bzw. 34ab verringert.

Bei der in den Figuren 2a bis e dargestellten Ausführung sind die Schweißelektro-den 40, 41 an den Segmenten 32, 34 mit einer Klemmhalterung 42 befestigt, die sich lösen lässt, um die Schweißelektroden 40, 41 gegenüber den Segmenten 32, 34 und insbesondere in ihrer Höhe gegenüber deren Stirnfläche 32a bzw. 34a zu verstellen und somit entsprechend justieren zu können. Alternativ kann als Elektrodenverstelleinrichtung auch ein Gewindebolzen verwendet werden, der mit den Schweißelektroden 40, 41 derart gekoppelt ist, dass eine Drehung dieses Gewindebolzens eine Verstellung der Schweißelektrode in deren Längsrichtung bewirkt.

Die Versorgung der Schweißelektroden 40, 41 erfolgt im dargestellten Ausführungsbeispiel über nicht gezeigte Kabel, die an einer stationär angeordneten externen elektrischen Energieversorgungseinrichtung angeschlossen sind, welche gemeinsam mit den Schweißelektroden 40, 41 Teil einer Elektroschweißeinrichtung ist, jedoch in den Figuren insoweit nicht vollständig dargestellt ist. Ferner weist die Elektroschweißeinrichtung mindestens einen Kondensator auf, der in den Figuren ebenfalls nicht abgebildet ist. Ein solcher Kondensator lässt sich vorteilhaft als Speicher von großer elektrischer Energie verwenden, die innerhalb kürzester Zeit zur Versorgung der Schweißelektroden 40, 41 abgegeben werden kann, während demgegenüber an die elektrische Energieversorgungseinrichtung keine hohen Anforderungen gestellt werden müssen, da für den Aufladevorgang deutlich mehr Zeit zur Verfügung steht; denn die Zeitintervalle zwischen den Bobinenwechseln sind relativ lang. Bevorzugt ist der Kondensator stationär angeordnet und erfolgt die Übertragung der aus dem Kondensator zu entladenden elektrischen Energie an die Schweißelektroden 40, 41 über die bereits erwähnten Kabel. Alternativ ist es aber auch beispielsweise denkbar, die Stromversorgung über stationäre Schleifkontakte vorzusehen, die mit am Segment ausgebildeten umlaufenden Kontaktflächen in Berührung stehen, sodass die Verwendung von Kabeln nicht notwendig ist, wobei bei dieser alternativen Ausführung es ebenfalls denkbar ist, auch den Kondensator an einem der Segmente 32, 34 anzuordnen.

Die Steuerung der Antriebe 38, 39 und der Schweißelektroden 40, 41 erfolgt über eine in den Figuren ebenfalls nicht abgebildete Steuerungseinrichtung. Die Antriebe 38, 39 und die Steuerungseinrichtung sind dabei so ausgebildet, dass die Segmente 32, 34 synchron von einer in Bezug auf die Bewegungsrichtung der Metallstreifen 12a, 12b gemäß Pfeil A stromaufwärts gelegenen Anfangsruhestellung in eine Arbeitsstellung beschleunigt, von der Arbeitsstellung in eine in Bezug auf die Bewegungsrichtung der Metallstreifen 12a, 12b stromabwärts gelegene Endruhestellung abgebremst und anschließend einer entgegengesetzten Bewegung von der Endruhestellung in die Anfangsruhestellung unterbrochen wird. Im dargestellten Ausführungsbeispiel beträgt der Winkelabstand zwischen der Anfangsruhestellung und der Endruhestellung etwa 270°.

Wenn ein Bobinenwechsel ansteht, wird zunächst von der neuen Bobine 8b der neue Metallstreifen 12b durch die Verbindungseinheit 24 geführt und in den Vorspannwickler 30 eingefädelt. Ferner erhält nun auch der Nachspannwickler 20 Zugriff auf den alten Metallstreifen 12b. Dieser Zustand ist schematisch in Figur 1 gezeigt. Anschließend werden die Antriebe 38, 39 von der Steuerungseinrichtung derart angesteuert, dass die Segmente 32, 34 von ihrer Anfangsruhestellung in Bewegungsrichtung der Metallstreifen 12a, 12b und unter gleichzeitiger Annäherung an die Metallstreifen 12a, 12b in eine Schwenkbewegung verbracht werden; Figur 2a zeigt eine Momentaufnahme während dieser Schwenkbewegung.

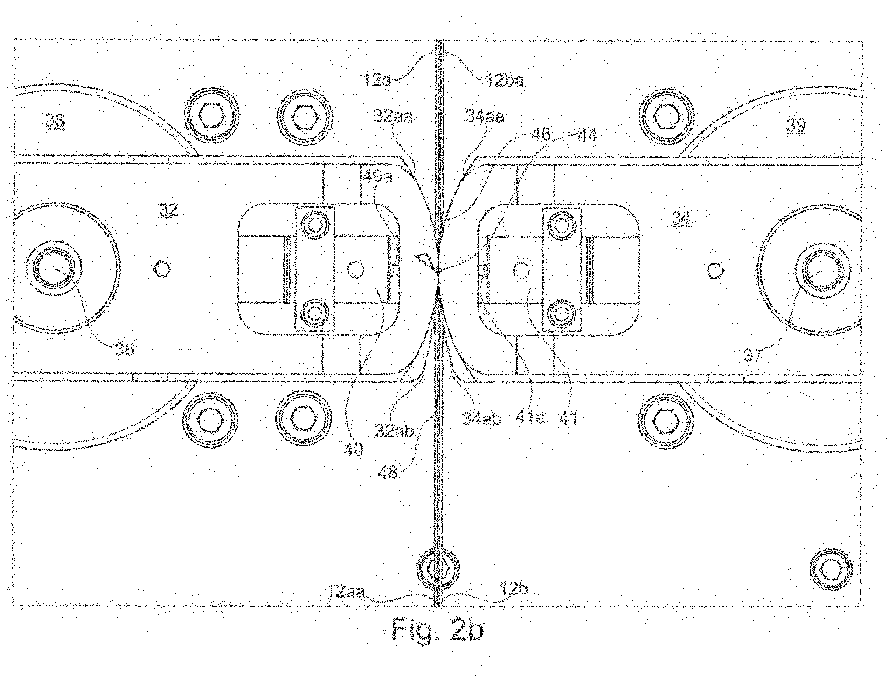

Bei fortgesetzter Schwenkbewegung in Richtung der Bewegungsrichtung der Metallstreifen 12a, 12b gemäß den in den Figuren 1 und 2a dargestellten Pfeilen A gelangen dann die beiden Segmente 32, 34 unter zunehmender Verringerung des Abstandes zwischen ihren Stirnflächen 32a, 34a in eine Arbeitsstellung, in der der Abstand zwischen den dann gegenüberliegenden Stirnflächen 32a, 34a nicht größer ist als die Dicke der dazwischenliegenden Anordnung aus den beiden übereinanderliegenden Metallstreifen 12a, 12b. In der Arbeitsstellung, in der die Segmente 32, 34 in Figur 2b abgebildet sind, liegen sich die Elektrodenspitzen 40a, 41a der beiden Schweißelektroden 40, 41 unmittelbar gegenüber. Nachdem die Segmente 32, 34 ihre Arbeitsstellung erreicht haben, beginnt der Schweißvorgang, um eine Verbindungsstelle 44 zu bilden, an der die beiden Metallstreifen 12a, 12b aneinander angeheftet sind. Für die Abführung der dabei entstehenden Wärme sind die Stirnflächen 32a, 34a der Segmente 32, 34 zumindest abschnittsweise mit einem wärmeleitfähigen Material versehen.

Grundsätzlich sind die Schweißelektroden 40, 41 dauerhaft an dem erwähnten Kondensator angeschlossen und stehen somit dauerhaft unter Spannung. Dabei ist darauf zu achten, dass diese Spannung einen Wert hat, der die Bildung eines Funkens oder Lichtbogens zwischen den Elektrodenspitzen 40a, 41a der beiden Schweißelektroden 40, 41 automatisch bewirkt, wenn ein vorgegebener minimaler Abstand zwischen den beiden Elektrodenspitzen 40a, 41a unterschritten wird, was bei Eintritt der Segmente 32, 34 in die Arbeitsstellung der Fall ist. Demnach können die Schweißelektroden 40, 41 dauerhaft aktiv sein.

Alternativ zu einer dauerhaften Aktivierung der Schweißelektroden 40, 41 ist es auch denkbar, die erwähnte Steuerungseinrichtung ferner zur Steuerung der Schweißelektroden 40, 41 derart auszubilden, dass in der Arbeitsstellung der Segmente 32, 34 die Steuerungseinrichtung eine zumindest teilweise Entladung des zuvor erwähnten Kondensators freigibt. Selbstverständlich sollte dabei die Steue-rungseinrichtung die Schweißelektrode 40, 41 derart ansteuern, dass diese exakt bei Eintritt der Segmente 32, 34 in die Arbeitsstellung aktiviert und bei Verlassen der Arbeitsstellung wieder deaktiviert werden.

Da im dargestellten Ausführungsbeispiel das an der Stirnfläche 32a bzw. 34a der Segmente 32, 34 freiliegende Ende der Elektrodenspitzen 40a, 41a der Schwei-ßelektroden 40, 41 eine verhältnismäßig kleine Fläche aufweist, findet der Schweißvorgang als Punktschweißen statt. Dies ist für die Verbindung der relativ dünnen und schmalen Metallstreifen 12a, 12b aneinander völlig ausreichend, zumal verhältnismäßig wenig elektrische Energie benötigt wird und nur eine räumlich sehr begrenzte Wärmeentwicklung zu erwarten ist, da der Schweißvorgang nur innerhalb einer sehr kurzen Zeitspanne stattfindet, welche bevorzugt nicht länger als eine Sekunde dauert. Auf jeden Fall ist die Schweißzeit so kurz, dass die Schwenkbewegung der Segmente 32, 34 nicht unterbrochen zu werden braucht, sondern sich die Segmente 32, 34 synchron mit den Metallstreifen 12a, 12b weiterbewegen können. Da sich während des Schweißvorganges ja die Segmente 32, 34 weiterbewegen, ist somit die Arbeitsstellung über einen gewissen, wenn auch geringen, Winkelbereich zu definieren und kann deshalb alternativ insoweit auch als Arbeitsbereich bezeichnet werden.

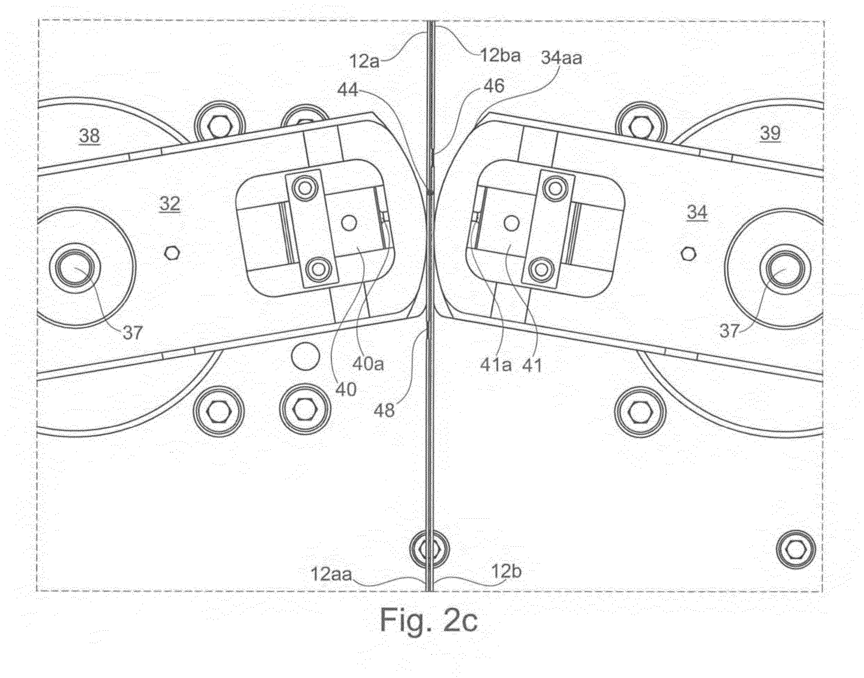

Bei Verlassen der Arbeitsstellung endet der Schweißvorgang und bewirkt die Steuerungseinrichtung zugleich eine fortgesetzte Fortbewegung der Segmente 32 in Richtung ihrer Endruhestellung. Dieser Zustand ist in Figur 2c gezeigt.

Wie die Figuren 2a bis 2c ferner erkennen lassen, ist der neue Metallstreifen 12b mit einer geschwächten Stelle 46 versehen, die konkret in seinem Anfangsabschnitt ausgebildet ist. Des Weiteren ist in Bezug auf die Bewegungsrichtung der Metallstreifen 12a, 12b der alte Metallstreifen 12a ebenfalls mit einer geschwächten Stelle 48 versehen, die in Bezug auf die Bewegungsrichtung der Metallstreifen 12a, 12b gegenüber der im neuen Metallstreifen 12b ausgebildeten geschwächten Stelle 46 in einem Abstand stromaufwärts liegt. Wie insbesondere Figur 2c erkennen lässt, ist die zueinander versetzte Positionierung dieser beiden geschwächten Stellen 46, 48 in Bezug auf die Verbindungsstelle 44 derart abzustimmen, dass die Verbindungsstelle 44 zwischen den beiden geschwächten Stellen 46, 48 ausgebildet wird. Dabei soll bevorzugt der Abstand der im Anfangsabschnitt 12ba des zulaufenden neuen Metallstreifens 12b ausgebildeten geschwächten Stelle 46 von der durch die Schweißelektroden 40, 41 zwischen den Metallstreifen 12a, 12b erzeugten Verbindungsstelle 44 geringer sein als der Abstand der Verbindungsstelle 44 von der im Endabschnitt 12aa der ablaufenden alten Materialbahn 12a erzeugten geschwächten Stelle 48, wie insbesondere Figur 2c gut erkennen lässt.

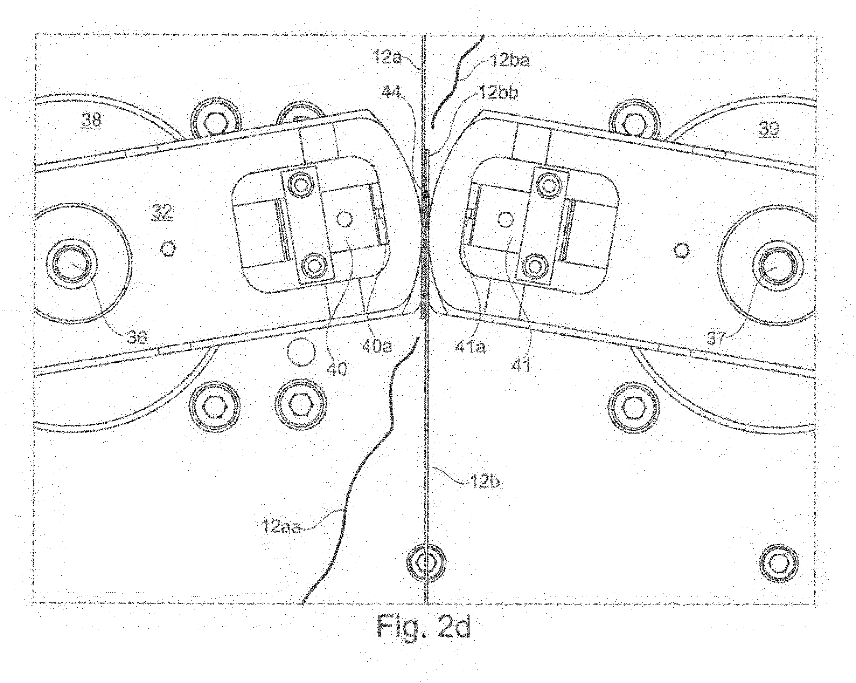

Die Ausbildung der geschwächten Stellen 46, 48 dienen dazu, die Metallstreifen 12a, 12b entsprechend zu schwächen, um dort eine Trennung durch Abreißen zu bewirken. Hierzu wird der Vorspannwickler 30 (Figur 1) auf eine Übergeschwindigkeit eingestellt, um den vorlaufenden Anfangsabschnitt 12ba des neuen Metallstreifens 12b mit einer etwas höheren Geschwindigkeit als die normale Bewegungsgeschwindigkeit der Metallstreifen 12a, 12b, welche ja der Prozessgeschwindigkeit entspricht und auch als Nenngeschwindigkeit bezeichnet werden kann, zu beaufschlagen, was zu einem Abriss an der geschwächten Stelle 46 führt. Demgegenüber wird der nachlaufende Endabschnitt 12aa des alten Metallstreifens 12a vom Nachspannwickler 20 mit einer Untergeschwindigkeit beaufschlagt, die geringer ist als die normale Bewegungsgeschwindigkeit der Metallstreifen 12a, 12b, was zu einem Abbremsen und dadurch bedingten Abriss des nachlaufenden Endabschnittes 12aa des alten Metallstreifens 12a an der geschwächten Stelle 48 führt. Dieser Zustand ist in Figur 2d gezeigt.

Zur Einstellung der Über- oder Untergeschwindigkeit werden der Nachspannwickler 20 und der Vorspannwickler 30 von der Steuerungseinrichtung ebenfalls entsprechend angesteuert.

Während des Abreißvorganges spielen im Übrigen die nachlaufenden Abschnitte 32ab, 34ab der Stirnflächen 32a, 34a eine wichtige Rolle, da sie als Klemmeingriffsabschnitte die beiden Metallstreifen 12a, 12b im Bereich ihrer noch einander überlappenden Anordnung unmittelbar stromaufwärts hinter der Verbindungsstelle 44 festhalten. Dadurch wird gewährleistet, dass die während des Trennungsvorgangs entstehende Zugkraft von den Segmenten 32, 34 an ihren Stirnflächen 32a, 34a sozusagen abgefangen werden und somit eventuelle Beschädigungen der Metallstreifen 12a, 12b verhindert werden.

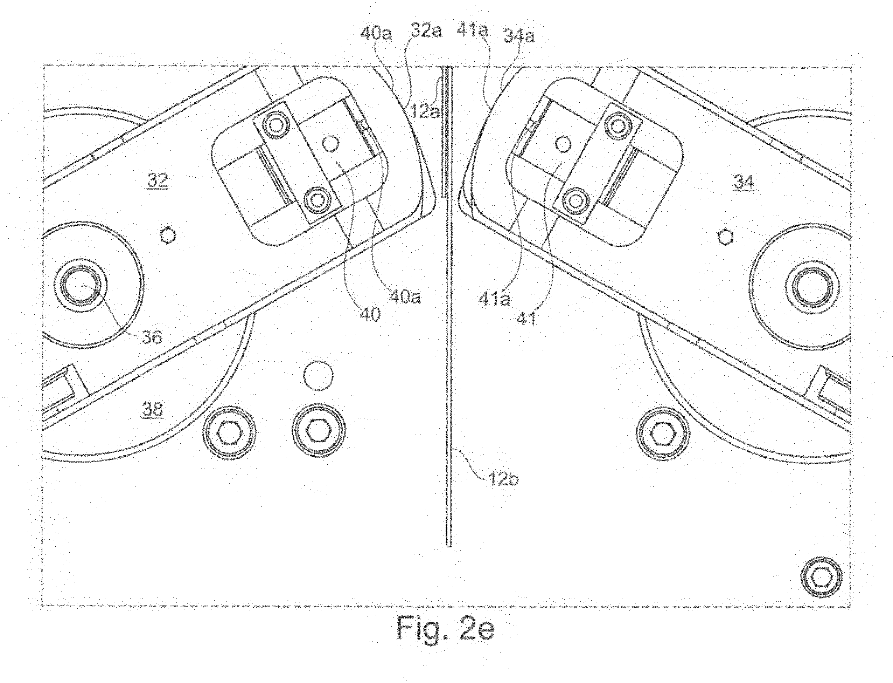

Nunmehr wird der Prozess fortgesetzt, indem der neue Metallstreifen 12b zunächst noch unter Mitwirkung des mit ihm verbundenen alten Metallstreifens 12a weiter von der neuen Bobine 8b (Figur 1) abgezogen und die Segmente 32, 34 in Richtung ihrer Endruhestellung weiter verschwenkt werden, wobei die Segmente 32, 34 sich mit ihren Stirnflächen 32a, 34a vollständig von der einander überlappenden Anordnung der beiden Metallstreifen 12a, 12b lösen und somit auch außer Eingriff von dem nun allein nachfolgenden neuen Metallstreifen 12b gelangen. Eine Momentaufnahme dieses Zustandes ist in Figur 2e gezeigt.

Nachdem die Segmente 32, 34 ihre (in den Figuren nicht dargestellte) Endruhestellung erreicht haben, werden deren Antriebe 38, 39 von der Steuerungseinrichtung entsprechend umgesteuert, um nun die Segmente 32, 34 von ihrer Endruhestellung entgegen der Bewegungsrichtung A der Metallstreifen 12a, 12b wieder zurück in ihre (in den Figuren ebenfalls nicht dargestellte) Anfangsruhestellung zu verschwenken. Da zu diesem Zeitpunkt nur noch ein Metallstreifen in einlagiger Form, bei dem es sich dann um den neuen Metallstreifen 12b handelt, durch die Verbindungseinheit 24 geführt wird, findet beim Zurückverschwenken der Segmente 32, 34 auch kein wesentlicher Eingriff von deren Stirnflächen 32a, 34a mit dem Metallstreifen 12b statt.

Zur Bildung der zuvor erwähnten geschwächten Stellen 46, 48, die alternativ auch als Schwächungen bezeichnet werden können, sind die Schwächungseinrichtungen 16a, 16b vorgesehen, die anhand von Figur 1 beschrieben worden sind. Um die zuvor beschriebene versetzte Anordnung der geschwächten Stellen 46, 48 zueinander sowie die Anordnung der Verbindungsstelle 44 zwischen den geschwächten Stellen 46, 48 zu verwirklichen, sind die Schwächungseinrichtungen 16a, 16b in der Ausführung gemäß Figur 1 von der Steuerungseinrichtung entsprechend anzusteuern und ggf. auch entsprechend räumlich versetzt zueinander anzuordnen.

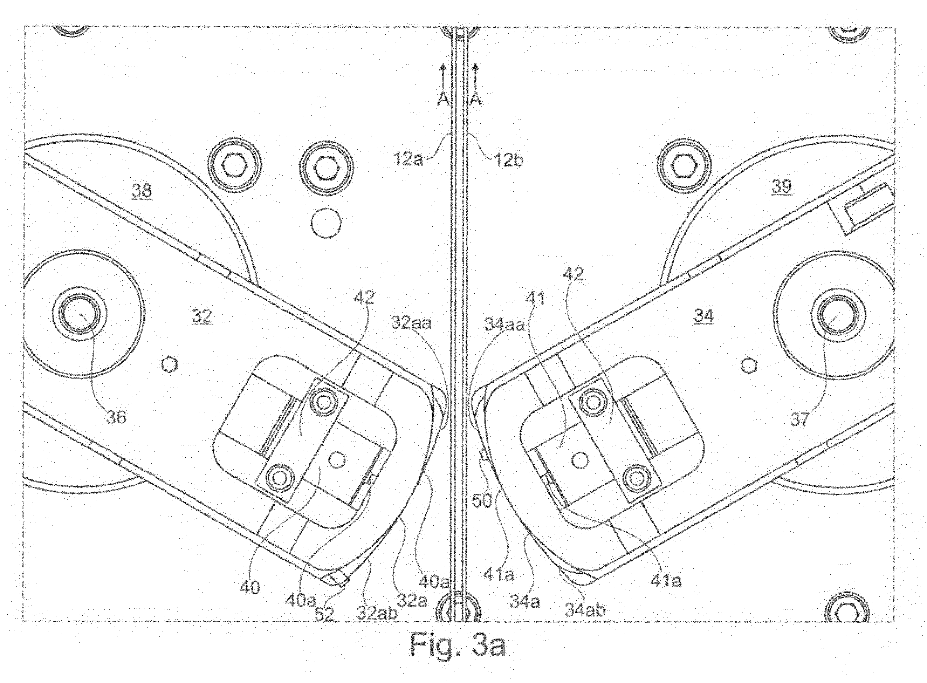

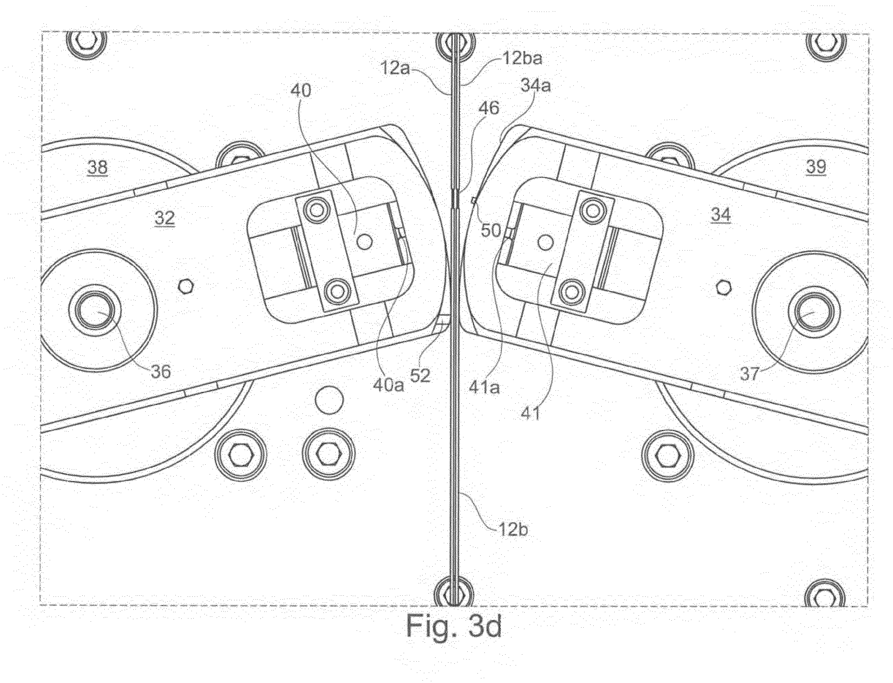

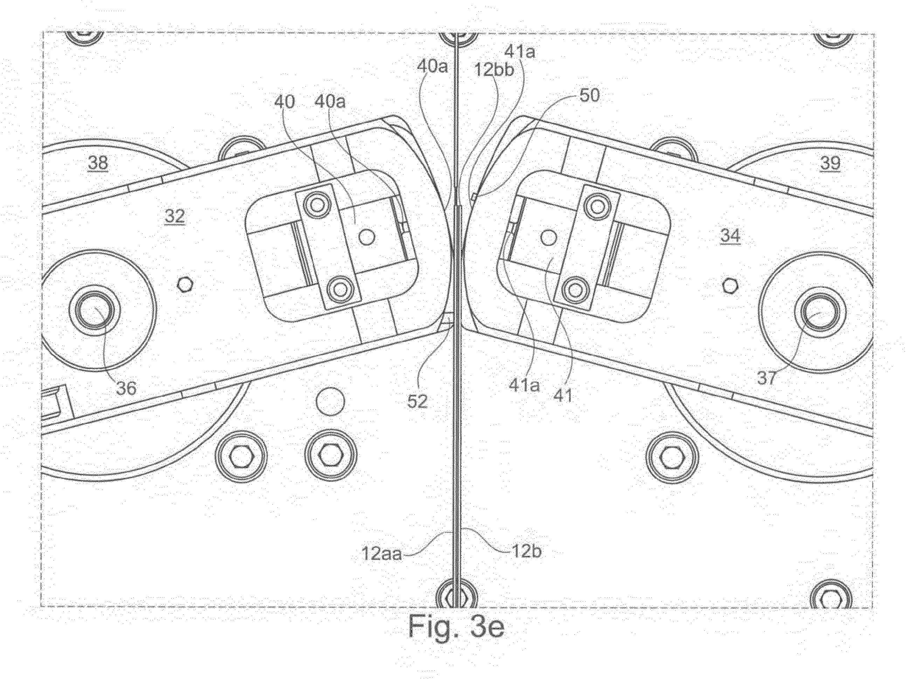

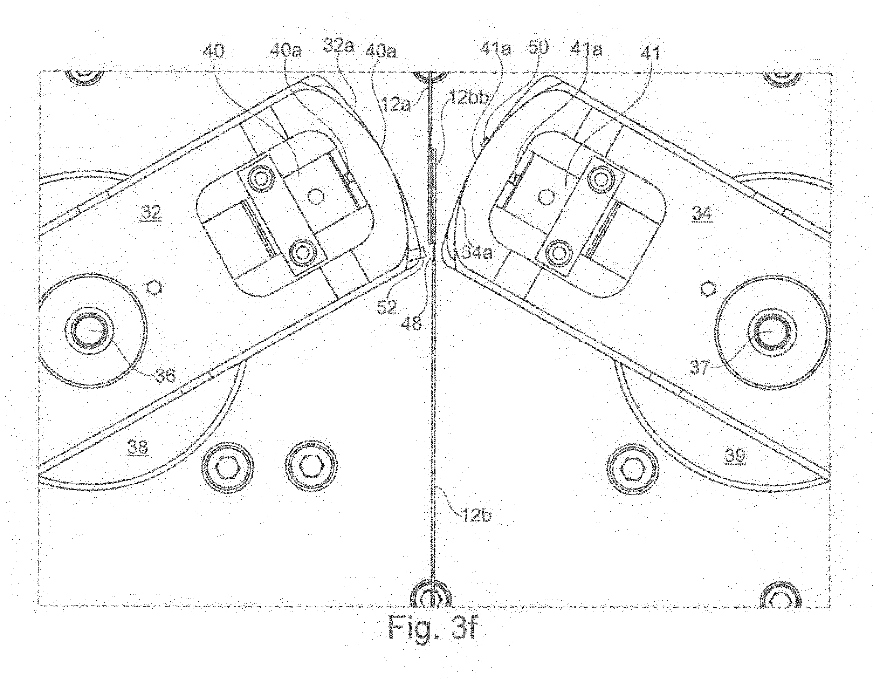

Bei einer alternativen Ausführung, wie sie in den Figuren 3a bis 3f gezeigt ist, ist die Schwächungseinrichtung in Form eines als Vorsprung ausgebildeten ersten Schwächungselementes 50, das in Bezug auf die Bewegungsrichtung A der Metallstreifen 12a, 12b stromabwärts nach der Elektrodenspitze 41a an der Stirnfläche 34a des zweiten Segmentes 34 angeordnet und zur Erzeugung der geschwächten Stelle 46 im Anfangsabschnitt 12ba des zulaufenden neuen Metallstreifens 12b vorgesehen ist, wie insbesondere Figur 3d erkennen lässt, und des Weiteren in Form eines als Vorsprung ausgebildeten zweiten Schwächungselementes 52 realisiert, das in Bezug auf die Bewegungsrichtung A der Metallstreifen 12a, 12b stromaufwärts vor der Elektrodenspitze 40a an der Stirnfläche 32a des ersten Segmentes 32 angeordnet und zur Erzeugung der geschwächten Stelle 48 im Endabschnitt 12aa des ablaufenden alten Metallstreifens 12a vorgesehen ist, wie insbesondere Figur 3f in Verbindung mit Figur 3e erkennen lässt.

Die Schwächungselemente 50, 52 können sich grundsätzlich über die gesamte Breite des Metallstreifens 12a, 12b erstrecken. Alternativ ist es aber auch denkbar, die Schwächungselemente 50, 52 so zu gestalten, dass sie den Metallstreifen 12a, 12b nicht über dessen gesamte Breite, sondern nur in einem bestimmten Abschnitt, in bestimmten Bereichen oder an bestimmten Stellen schwächen und demgegenüber in den übrigen Bereichen den Metallstreifen 12a, 12b unberührt lassen und dort somit keine Schwächung erzielen. Beispielsweise können bei einer Breite des Metallstreifens 12a, 12b von 4 mm zwei, drei, vier, fünf oder sechs, bevorzugt äquidistant voneinander, über die Breite des Metallstreifens 12a, 12b angeordnete Stege jeweils mit einer Breite von beispielsweise 0,3 mm erzeugt werden.

Ferner können die Schwächungselemente 50, 52 in Abweichung von der in den Figuren 3a bis 3f schematisch dargestellten Querschnittsform alternativ auch als spitze Schneide oder mit einer spitzen Schneide ausgebildet sein, wodurch sich die Schwächungswirkung noch verstärken oder bereits eine im Wesentlichen vollständige Durchtrennung des jeweiligen Metallstreifens 12a bzw. 12b realisieren lässt.

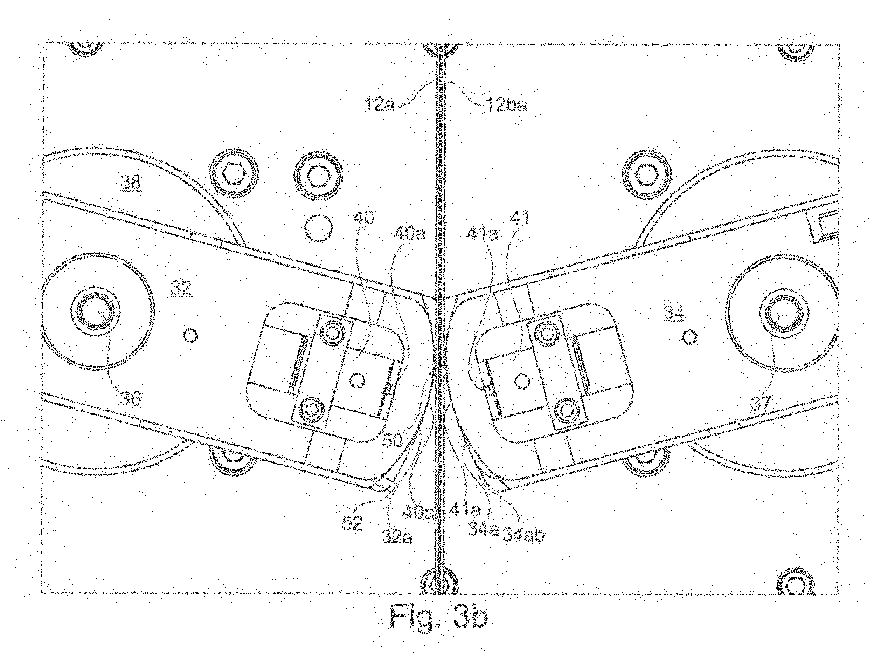

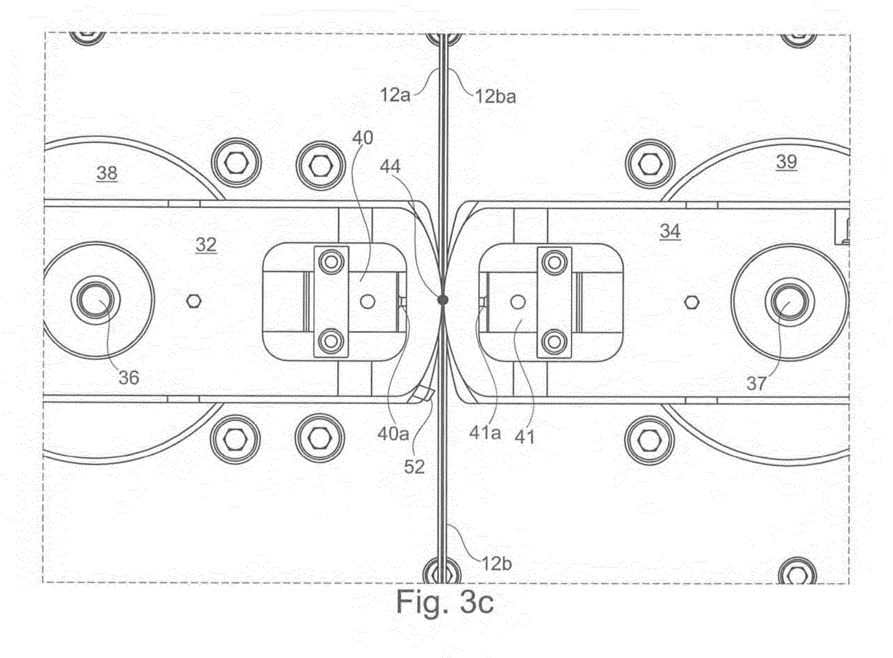

Im Übrigen entspricht die Ausführung gemäß den Figuren 3a bis 3f hinsichtlich ihrer Konstruktion und Wirkungsweise der Ausführung gemäß den Figuren 2a bis 2e, so dass zur Vermeidung von Wiederholungen auf die Beschreibung jener Ausführung anhand der Figuren 2a bis 2e verwiesen wird. In diesem Zusammenhang sei zum besseren Verständnis noch angemerkt, dass hinsichtlich der Schwenkstellung und des Betriebszustandes die Figuren 3a und 3b im Wesentlichen mit der Figur 2a vergleichbar sind, die Figur 3c im Wesentlichen der Figur 2b entspricht, die Figur 3d im Wesentlichen der Figur 2c entspricht, die Figur 3e im Wesentlichen mit der Figur 2d vergleichbar ist und die Figur 3f mit der Figur 2d der Figur 2e entspricht.

Zumindest einige der in der Vorrichtung gemäß Figur 1 verwendeten Rollen bzw. Führungsrollen, über die der Metallstreifen 12 bzw. die Metallstreifen 12a, 12b laufen, sind ballig gestaltet, was in den Figuren nicht dargestellt ist. D.h. die Umfangsfläche der Rolle ist über ihre Breite, die bevorzugt im Wesentlichen der Breite des geführten Metallstreifens 12 bzw. 12a, 12b entspricht, im Querschnitt zumindest geringfügig nach außen gewölbt. Dies führt zu zwei Vorteilen beim Materiallauf gegenüber zylindrischen Rollen. Zum einen lässt sich dadurch besonders wirksam die in Querrichtung wirkende, oszillierende Bewegung, der der Metallstreifen 12a bzw. 12b beim Abziehen von der jeweiligen Bobine 8a bzw. 8b unterworfen wird, beseitigen, so dass nach Passieren einer ersten ballig ausgeführten Rolle wie die Leitrollen 10 und/oder die stromabwärts liegenden Führungsrollen 14 in der in Figur 1a dargestellten ersten Ausführung der Vorrichtung oder die Führungsrollen 14 in der in Figur 1b dargestellten zweiten Ausführung der Vorrichtung der Metallstreifen 12a bzw. 12b in einen ruhigen Geradeauslauf gebracht wird und somit dann ohne störende Querbewegungen läuft. Zum anderen bewirkt die Wölbung, dass sich beim Punktschweißen die gegenüberliegenden Metallstreifen 12a, 12b an ihrem (radial betrachtet) höchsten Punkt und somit im Wesentlichen in der Mitte berühren. Somit wird auch der Schweißpunkt definiert im Wesentlichen in der Mitte der beiden Metallstreifen 12a, 12b erzeugt, da sich, wie erwähnt, die beiden einander gegenüberliegenden Metallstreifen 12a, 12b zuerst berühren.

Wie in Figur 1 schematisch dargestellt, werden die Metallstreifen 12 bzw. 12a, 12b über mehrere Führungsrollen 10, 14, 22, 26, 28 geführt. Während des Betriebes kann es vorkommen, dass sich während der Bewegung des Metallstreifens die Bahnspannung, also die Spannung im Metallstreifen, abrupt ändert und dann ggf. zeitweise sogar keine Bahnspannung mehr vorliegt. Dies ist beispielsweise der Fall, wenn prozessbedingt der Metallstreifen auf der einen Seite einer Führungsrolle abgeschnitten und auf der anderen Seite dieser Rolle gezogen wird. Dies ist, wie zuvor beschrieben wurde, insbesondere beim Verbinden der beiden Metallstreifen 12a, 12b der Fall. Dabei besteht die Gefahr, dass in diesem Moment der Metallstreifen nicht zuletzt aufgrund seiner relativ hohen Steifigkeit trotz vorhandener seitlicher Führungen von der Führungsrolle abspringt. Um diese Gefahr zu verringern oder gar zu vermeiden, böte sich als eine Lösung an, benachbart zum Umfang der Rolle eine Führung, eine Halterung, ein Blech oder ein Schutzelement vorzusehen, was aber den Nachteil hätte, dass der Metallstreifen viel schlechter über die Rolle eingefädelt werden kann.

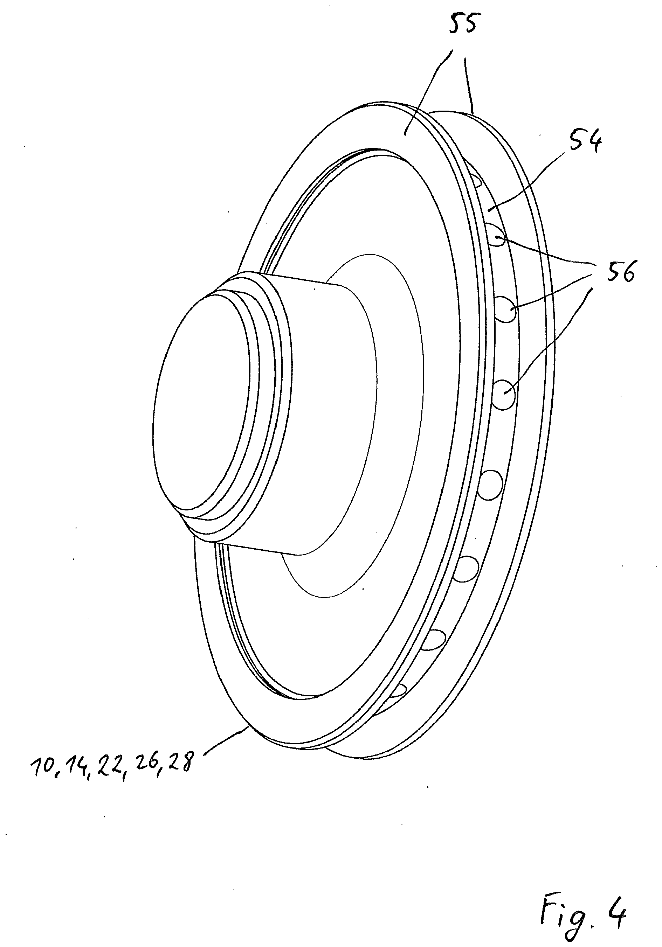

Gemäß der in Figur 4 abgebildeten bevorzugten Ausführung besteht eine alternative Lösung darin, bei einer oder mehreren der in der Vorrichtung gemäß Figur 1 verwendeten Führungsrollen 10, 14, 22, 26 und/oder 28 entlang des Umfanges 54, der von zwei seitlichen flanschartigen Rändern 55 begrenzt wird, Magnetelemente 56 vorzusehen, die so angeordnet sind, dass deren Außenseite im Wesentlichen bündig mit dem Umfang 54 abschließt und somit fluchtend zum Umfang 54 angeordnet ist. Wie Figur 4 ferner erkennen lässt, sind die Magnetelemente 56 im Wesentlichen äquidistant zueinander über den Umfang 54 verteilt angeordnet; alternativ ist es aber auch denkbar, die Laufrolle entlang ihres Umfanges 54 anstelle von diskreten Magnetelementen 56 komplett mit Magnetmaterial zu versehen, beispielsweise in Form eines Magnetstreifens oder durch Beschichtung von magnetischem Material.

Der Vorteil einer solchen Führungsrolle, deren Umfang magnetisch ist, besteht nicht nur darin, dass der aus ferromagnetischem Material bestehende Metallstrei-fen nicht mehr von der Führungsrolle springen kann, sondern des Weiteren darin, dass das Einfädeln des Metallstreifens nicht beeinträchtigt wird.

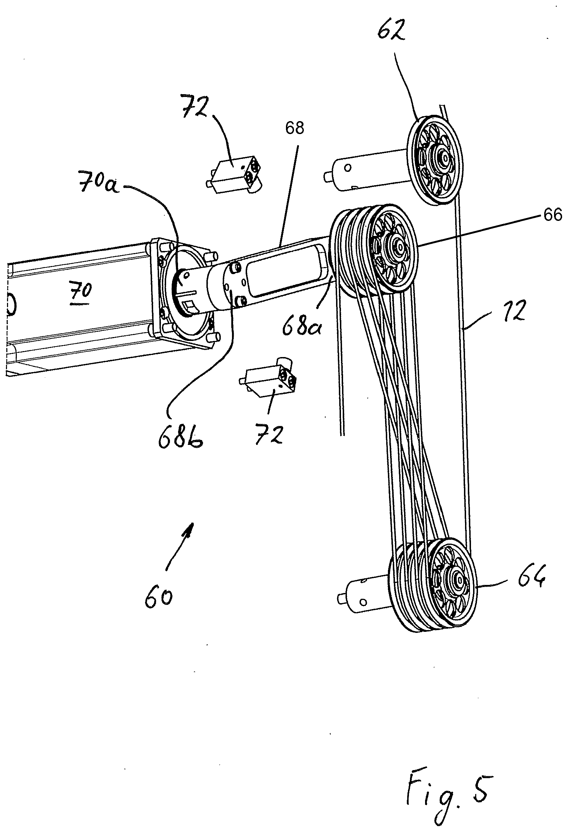

Wie Figur 1 ferner erkennen lässt, ist stromabwärts von der Führungsrolle 26, die wiederum stromabwärts von der Verbindungseinheit 24 liegt, eine Tänzeranordnung 60 vorgesehen, die in Figur 5 in einer bevorzugten Ausführung im Einzelnen vergrößert abgebildet ist. Die in Figur 5 beispielhaft dargestellte Tänzeranordnung 60 weist eine Führungsrolle 62 auf, die wie die Führungsrollen 10, 14, 22, 26 und 28 einscheibig bzw. einbahnig ausgeführt ist. Die Tänzeranordnung 60 weist ferner zwei weitere Gruppen von koaxial zueinander angeordneten, jeweils einbahnigen Rollen 64 und 66 auf. Jede Gruppe der Rollen 64, 66 bildet in Abhängigkeit von der Anzahl der Rollen eine entsprechende mehrbahnige Rollenanordnung, und zwar im Gegensatz zur Führungsrolle 62, bei der es nur um eine einbahnige Rolle handelt. Im dargestellten Ausführungsbeispiel gemäß Figur 5 weisen die beiden Gruppen von Rollen 64 und 66 jeweils vier Rollen auf und bilden somit eine vierbahnige Rollenanordnung. Alternativ ist es auch denkbar, anstelle von zu einer mehrbahnigen Gruppe zusammengefassten und koaxial zueinander angeordneten, jeweils einbahnigen Rollen eine entsprechend mehrbahnige Rolle zu verwenden. Wie Figur 5 erkennen lässt, wird der Metallstreifen 12 zwischen den beiden Gruppen von Rollen 64 und 66 nach Art eines Flaschenzuges geführt, wobei in dem in Figur 5 dargestellten Ausführungsbeispiel ein Flaschenzug mit achtfacher Untersetzung gebildet wird. Damit die einzelnen Trums des Metallstreifens 12 zwischen den beiden Gruppen von Rollen 64 und 66 nicht miteinander kollidieren, sind die beiden Gruppen von Rollen 64 und 66 um eine halbe Bahnbreite zueinander versetzt angeordnet.

Während die eine Gruppe von Rollen 64 stationär angeordnet ist, ist die andere Gruppe von Rollen 66 am freien Ende 68a eines beweglichen Tänzerarmes 68 gelagert. Der Tänzerarm 68 ist mit seinem anderen Ende 68b an einer Ausgangswelle 70a eines Elektromotors 70 drehfest montiert, so dass sich in Bezug auf die Ausgangswelle 70a des Elektromotors 70 der Tänzerarm 68 in radialer Richtung erstreckt. Mit Hilfe des Elektromotors 70 wird somit der Tänzerarm 68 einer Schwenkbewegung unterworfen, wobei die Schwenkbewegung in einer solchen Weise ausgeführt wird, dass der Metallstreifen 12 mit seinen Trums zwischen den beiden Gruppen von Rollen 64 und 66 gespannt ist, wie Figur 5 schematisch erkennen lässt. Die Schwenkstellung des Tänzerarmes 68 wird von Sensoren überwacht, bei denen es sich im dargestellten Ausführungsbeispiel gemäß Figur 5 um berührungslos arbeitende Sensoren 72 handelt, die beispielsweise als Näherungsschalter ausgebildet sind. In Abhängigkeit von den Messsignalen der Sensoren 72 wird über eine nicht dargestellte Steuerungseinrichtung der Elektromotor 70 entsprechend angesteuert.

Eine Tänzeranordnung ist grundsätzlich bekannt und wird primär zur Steuerung der Bahnspannung verwendet. Der Vorteil der beschriebenen Tänzeranordnung 60 besteht in ihrer zusätzlichen Funktion als Speicher, da aufgrund der zuvor beschriebenen Flaschenzug-Anordnung auf verhältnismäßig kleinem Raum ein relativ langer Abschnitt des Metallstreifens 12 und somit relativ viel Material gespeichert werden kann.

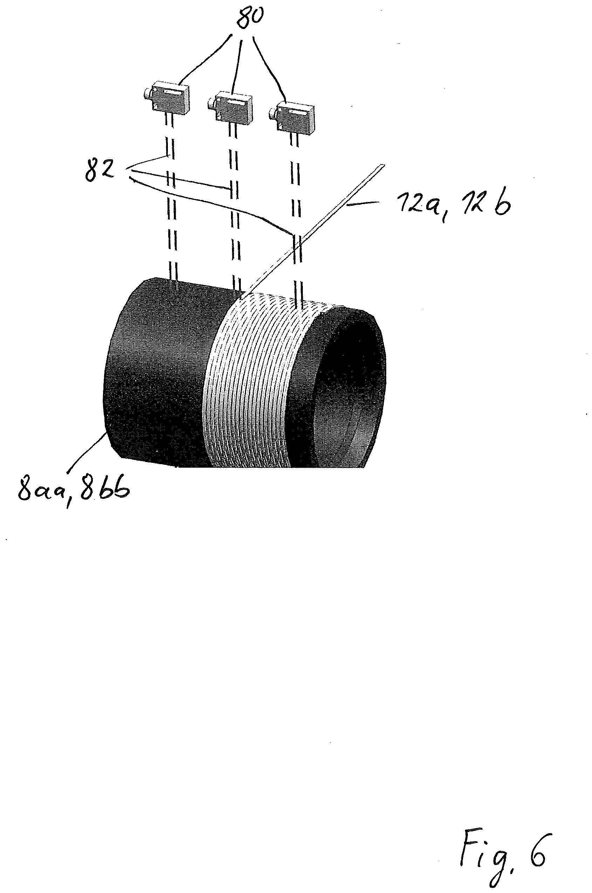

Der Metallstreifen 12a bzw. 12b ist zur Bildung einer Bobine 8a bzw. 8b auf dem zugehörigen Bobinenkern 8aa bzw. 8bb aufgrund seiner geringen Breite bevorzugt in einer reziprok oszillierenden Anordnung ähnlich wie bei einer Garnrolle aufgewickelt, wie Figur 6 schematisch erkennen lässt. Um bei Bobinen aus breitem Bahnmaterial, das Lage über Lage wie bei einer Toilettenrolle aufgewickelt ist, den richtigen Zeitpunkt zum Wechsel der Bobine mit möglichst wenig Restmaterial auf dem Bobinenkern zu bestimmen, wird mit Hilfe der Geschwindigkeit des abgezogenen Bahnmaterials und der Drehzahl der ablaufenden Bobine der Durchmesser dieser Bobine relativ genau berechnet, da sich keine Markierung kurz vor dem Ende auf dem Bahnmaterial befindet, welche optisch erkannt werden könnte. Bei dem in Figur 6 dargestellten Wickelschema führt jedoch eine solche Berechnung zwangsläufig dazu, dass sich noch ein verhältnismäßig großer Anteil des Metallstreifens 12a bzw. 12b auf dem Bobinenkern 8aa bzw. 8bb befindet, bevor das Ende des Metallstreifens 12a bzw. 12b erreicht ist.

Deshalb werden in dem in Figur 6 dargestellten Ausführungsbeispiel mehrere Sensoren 80 verwendet, die mit Hilfe von Messstrahlen 82 den Bobinenkern 8aa bzw. 8bb bzw. die noch auf dem Bobinenkern 8aa bzw. 8bb befindliche Restlänge des Metallstreifens 12a bzw. 12b abtasten. Aus den Messsignalen dieser Sensoren 80 lässt sich dann ermitteln, mit viel Umschlingungen sich noch eine Restlänge des Metallstreifens 12a bzw. 12b auf dem Bobinenkern 8aa bzw. 8bb befindet, um daraus den exakten Zeitpunkt zum Wechseln der Bobine zu ermitteln und somit den Wechsel der Bobine dann zeitgenau einzuleiten.

Bevorzugt handelt es sich bei den Sensoren 80 um optische Sensoren, die beispielsweise entsprechend ihrer Anzahl mehrere Lichtschranken bilden. Alternativ kann auch ein Kamerasystem eingesetzt werden, das auf die Oberfläche der Bobine bzw. des zugehörigen Bobinenkerns 8aa bzw. 8bb schaut und dadurch insbesondere den bereits sichtbaren Anteil des Bobinenkerns 8aa bzw. 8bb erkennt. Für eine bessere Erkennbarkeit sollten sich die Bobinenkerne 8aa, 8bb farblich oder auf andere Weise von den verwendeten Metallstreifen 12a, 12b unterscheiden.

Aus Sicherheitsgründen sollte vorzugsweise gewährleistet sein, dass die Bahnspannung im Metallstreifen 12 einen vorbestimmten kritischen Wert nicht überschreiten kann. Hierzu kann bevorzugt eine Bahntrenneinrichtung verwendet werden, die den Metallstreifen 12 beim Überschreiten der Bahnspannung beispielsweise in Folge einer Fehlfunktion automatisch durchtrennt.

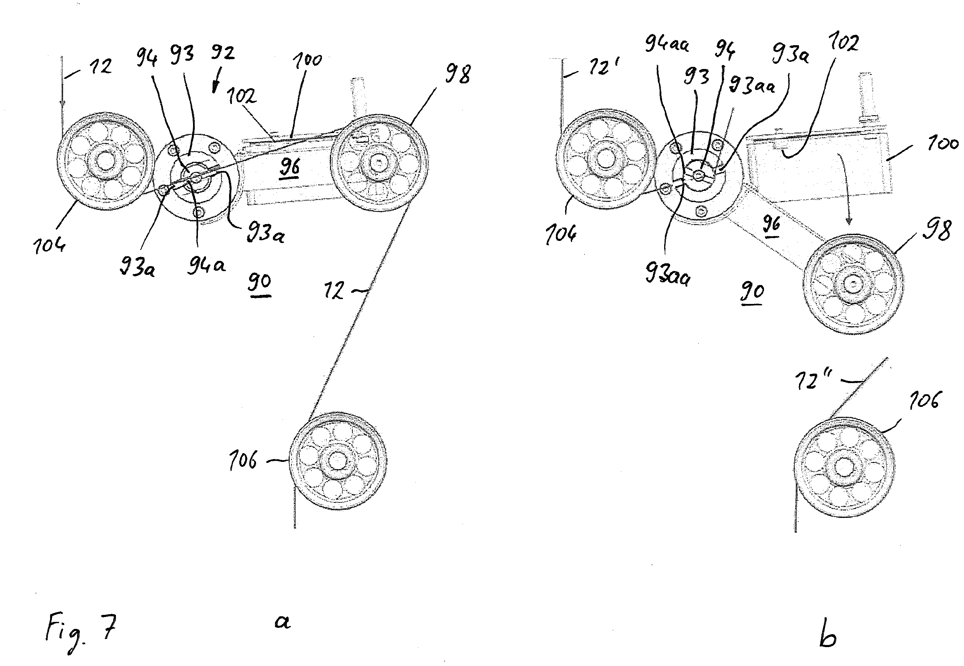

Eine solche Bahntrenneinrichtung gemäß einem bevorzugten Ausführungsbeispiel ist in Figur 7 dargestellt und mit dem Bezugszeichen "90" gekennzeichnet und kann bevorzugt stromabwärts von der Tänzeranordnung 60 eingesetzt werden, wie beispielhaft in Figur 1c gezeigt ist.

Die in Figur 7 beispielhaft dargestellte Bahntrenneinrichtung 90 weist eine Trennanordnung 92 auf, die einen stationär angeordneten äußeren Ring 93 und eine innerhalb des äußeren Ringes 93 drehbar gelagerte innere Scheibe 94 aufweist. Der äußere Ring 93 enthält in seinen beiden diametral gegenüberliegenden Abschnitten jeweils einen in Bezug auf die Drehachse der inneren Scheibe 94 diametral verlaufenden Schlitz 93a. Ferner enthält auch die innere Scheibe 94 einen in Bezug auf deren Drehachse diametral verlaufenden Schlitz 94a, wobei in der in Figur 7a gezeigten Drehstellung der inneren Scheibe 94 deren Schlitz 94a mit den beiden Schlitzen 93a im äußeren Ring 93 fluchtet. Im Übrigen kann der äußere Ring 93 auch eine andere äußere Formgebung haben, sofern die übrigen zuvor beschriebenen konstruktiven Merkmale erfüllt sind.

An der drehbar gelagerten inneren Scheibe 94 ist ein Hebel 96 drehfest angeordnet, dessen Schwenkbewegung somit eine Drehbewegung der inneren Scheibe 94 auslöst, wie ein Vergleich von Figur 7b mit Figur 7a erkennen lässt. Demnach ist der Hebel 96 um die gleiche Drehachse wie die innere Scheibe 94 verschwenkbar. Am äußeren Ende des Hebels 96 ist eine Führungsrolle 98 drehbar gelagert.

Ferner weist die Bahntrenneinrichtung 90 einen Magnethalter 100 auf, an dem ein Magnetelement 102 befestigt ist, um den Hebel 96 in der Figur 7 gezeigten Stellung zu halten. Hierzu muss natürlich der Hebel 96 zumindest an der mit dem Magnetelement 102 in Eingriff befindlichen Stelle entsprechend mit ferromagnetischem bzw. magnetisierbarem Material versehen sein.

Ferner weist die Bahntrenneinrichtung 90 im dargestellten Ausführungsbeispiel gemäß Figur 7 eine eingangsseitige Führungsrolle 104 auf, wobei die Führungsrollen 98 und 104 so angeordnet sind, dass in der in Figur 7a gezeigten Stellung des Hebels 96 der Metallstreifen 12 durch die in dieser Stellung miteinander fluchtenden Schlitze 93a und 94a verläuft. Ferner weist die Bahntrenneinrichtung 90 in dem in Figur 7 gezeigten Ausführungsbeispiel noch eine ausgangsseitige Führungsrolle 106 auf, die den Metallstreifen 12, von der Führungsrolle 98 am Hebel 96 kommend, führt und umlenkt, um ihn zu weiteren Prozessen in nachfolgenden (nicht dargestellten) Stationen zu transportieren.

Die axial verlaufenden Kanten der zur inneren Scheibe 94 gerichteten inneren Öffnung der Schlitze 93a im äußeren Ring 93 bilden jeweils eine feststehende Schneide, die in Figur 7b beispielhaft an einigen Stellen mit dem Bezugszeichen "93aa" gekennzeichnet ist. Die axial verlaufenden Kanten beider nach außen gerichteten Öffnungen des in der inneren Scheibe 94 ausgebildeten Schlitzes 94a bilden bewegliche Schneiden, von denen in Figur 7b beispielhaft einige mit dem Bezugszeichen "94aa" gekennzeichnet sind. Eine Verdrehung bzw. Rotation der inneren Scheibe 94 gegenüber dem äußeren Ring 93 führt zu einer entsprechenden Bewegung der an der Außenseite der inneren Scheibe 94 ausgebildeten beweglichen Schneide 94aa gegenüber einer benachbart an der Innenseite des stationären Ringes 94 ausgebildeten feststehenden Schneide 93aa, wodurch ein Schneidevorgang ausgelöst wird, der den Metallstreifen 12 durchtrennt.

Die Magnetkraft des am Magnethalter 100 befestigten Magnetelementes 102 ist in Abhängigkeit von einem vorbestimmten kritischen Wert für die Bahnspannung im Metallstreifen 12 bemessen. Überschreitet die Bahnspannung im Metallstreifen 12 den erwähnten vorbestimmten kritischen Wert, reicht die vom Magnetelement 102 erzeugte Magnetkraft nicht mehr aus, so dass dann der Hebel 96 durch den von der Führungsrolle 98 zur ausgangsseitigen Führungsrolle 106 verlaufenden Trum des Metallstreifens 12 vom Magnetelement 102 am Magnethalter 100 weggezogen, somit ausgelenkt und in der Perspektive von Figur 7 abrupt nach unten geschlagen wird. Dies löst eine entsprechende Drehbewegung der Scheibe 94 aus mit der Folge, dass durch Zusammenwirken einer beweglichen Schneide 94aa mit einer entsprechend benachbarten, feststehenden Schneide 93aa an dieser nun eine eine Trennstelle bildenden Stelle der Metallstreifen 12 in einen an der eingangsseitigen Führungsrolle 104 verbliebenen ersten Part 12' und einen an der ausgangsseitigen Führungsrolle 106 verbleibenden zweiten Part 12" durchtrennt wird. Dieser Zustand ist in Figur 7b gezeigt, bei der sich die dargestellte Bahntrenneinrichtung 90 in einem sog. ausgelösten Zustand befindet, während die Bahntrenneinrichtung 90 in Figur 7a in einem nicht ausgelösten Zustand gezeigt ist.

Um die Bahntrenneinrichtung 90 vom ausgelösten Zustand gemäß Figur 7b wieder zurück in den nicht ausgelösten (sozusagen normalen) Zustand gemäß Figur 7a zu verbringen, wird der Hebel 96, bevorzugt manuell, wieder in seine in Figur 7a gezeigte Stellung zurückbewegt, bis die magnetische Anziehungskraft des Magnetelementes 102 wirkt, und wird anschließend der Metallstreifen 12 durch die nunmehr wieder zueinander fluchtenden Schlitze 93a, 94a im äußeren Ring 93 und in der inneren Scheibe 94 eingefädelt.

Bei der in Figur 7 abgebildeten bevorzugten Ausführung einer Bahntrenneinrichtung 90 handelt es sich um eine sog. trennmesserlose und eigensichere Einrichtung, welche einen zusätzlichen Messerschutz, der das Einfädeln des Metallstrei-fens 12 erschweren würde, entbehrlich macht.

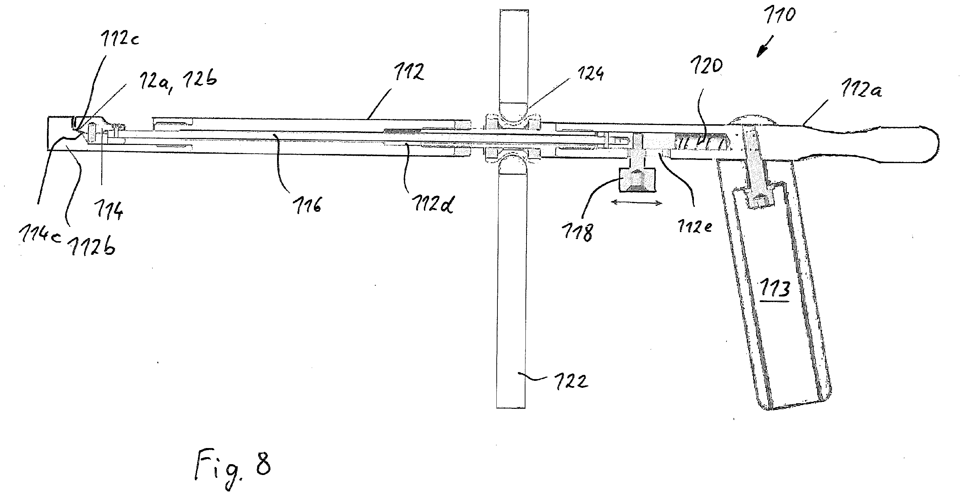

Figur 8 zeigt eine schematische Seitenansicht eines Hilfswerkzeuges 110 zum Einfädeln eines neuen Metallstreifens im Längsschnitt gemäß einem bevorzugten Ausführungsbeispiel. Das dargestellte Hilfswerkzeug 110 weist einen länglichen rohrförmigen Schaft 112 auf, an dessen erstem Ende 112a ein winklig zur Längser-streckung des Schaftes 112 abstehender Handgriff 113 angeordnet ist. Somit hat das abgebildete Hilfswerkzeug 110 die Form nach Art einer Pistole. Das zweite Ende 112b des Schaftes 112 ist mit einer gegenüber der Längserstreckung des Schaftes 112 geneigten Fläche versehen, bei der es sich um eine erste Klemmfläche 112c handelt. Im Bereich des zweiten Endes 112b des Schaftes 112 ist ein Klemmelement 114 vorgesehen, das mit einer gegenüber der Längserstreckung des Schaftes 112 geneigten Fläche versehen ist, bei der es sich um eine zweite Klemmfläche 114c handelt. Das Klemmelement 114 ist mit einem Stab 116 gekoppelt, der sich durch einen im Schaft 112 ausgebildeten länglichen Hohlraum 112d erstreckt, wie Figur 8 erkennen lässt. Dieser Stab 116 ist in Längsrichtung des Schaftes beweglich gelagert, wodurch auch das Klemmelement 114 entsprechend bewegbar angeordnet ist. Die erste Klemmfläche 112c und die zweite Klemmfläche 114c sind derart parallel zueinander ausgerichtet und ist die Anordnung des zweiten Endes 112b des Schaftes 112 und des beweglichen Klemmelementes 114 derart getroffen, dass in der in Figur 8 gezeigten Stellung des beweglichen Klemmelementes 114 deren zweite Klemmfläche 114c auf der ersten Klemmfläche 112c am zweiten Ende 112b des Schaftes 112 aufliegt.

Bei Bewegung des Stabes 116 in Richtung vom zweiten Ende 112b des Schaftes 112 weg (in der Ansicht von Figur 8 nach rechts) entfernt sich das bewegliche Klemmelement 114 mit seiner zweiten Klemmfläche 114c von der ersten Klemmfläche 112c, so dass zwischen diesen beiden Klemmflächen 112c, 114c ein Spalt entsteht. In diesem Spalt zwischen den beiden nun geöffneten Klemmflächen 112c, 114c lässt sich dann ein neuer Metallstreifen 12a oder 12b anordnen, der bei entgegengesetzter Bewegung des Stabes 116 und somit des beweglichen Klemmelementes 114 (in der Ansicht von Figur 8 nach links) in die in Figur 8 gezeigte Stellung zwischen den beiden Klemmflächen 112c, 114c eingeklemmt wird. Deshalb kann das zweite Ende 112b des Schaftes 112 auch als feststehendes erstes Klemmstück und das bewegliche Klemmelement 114 als bewegliches zweites Klemmstück bezeichnet werden. Die Bewegung des Stabes 116 und somit des beweglichen Klemmelementes 114 erfolgt im dargestellten Ausführungsbeispiel manuell mit Hilfe eines Bedienungselementes 118, das am anderen Ende des Stabes 116 befestigt ist und durch einen im Schaft 112 benachbart zum Handgriff 113 ausgebildeten Schlitz 112e nach außen ragt. Somit lässt sich das Hilfswerkzeug 110 mit der Hand eines Benutzers am Handgriff 113 halten und gleichzeitig das Bedienungselement 118 mit einem Finger ähnlich wie der Abzugshebel bei einer Pistole bedienen. Demnach erfolgt das Öffnen des Hilfswerkzeuges 110 mit Hilfe des Bedienungselementes 118, wobei eine zweite Hand seitens der Bedienperson zum Öffnen des Hilfswerkzeuges 110 nicht erforderlich ist. Wie Figur 8 ferner erkennen lässt, ist zwischen dem Bedienungselement 118 und dem benachbart zum Handgriff 113 befindlichen Ende des länglichen Hohlraumes 112d eine Feder 120 angeordnet, die den Stab 116 und somit das bewegliche Klemmelement 114 in die in Figur 8 gezeigte Klemmstellung vorspannt. Dadurch muss das Bedienungsele-ment 118 nur gegen den Druck der Feder 120 zum Öffnen der Klemmflächen 112c und 114c gegen den Druck der Feder 120 gezogen werden, während zum Verbringen des Stabes 116 und somit des beweglichen Klemmelementes 114 in die in Figur 8 gezeigte Klemmstellung das Bedienungselement 118 einfach losgelassen werden kann, so dass dann durch die Vorspannung der Feder 120 der Stab 116 mit dem beweglichen Klemmelement 114 wieder in die in Figur 8 gezeigte Klemmstellung verbracht wird.

Die in Figur 1 abgebildete Vorrichtung ist an ihrer (dem Betrachter von Figur 1 zugewandten) Vorderseite mit einer sog. Verschutzung versehen, die eine unbeabsichtigte Berührung der Aggregate und Komponente durch eine Bedienperson verhindert. Die Verschutzung besteht aus durchsichtigem Material oder enthält zumindest Fenster aus durchsichtigem Material wie beispielsweise Glas oder Acryl, um die Aggregate und Komponenten der Vorrichtung für die Bedienperson sichtbar zu machen. Diese Verschutzung ist in Figur 1 nicht dargestellt, jedoch in Figur 8 in einer gegenüber Figur 1 um 90° gedrehten Ansicht schematisch im Querschnitt gezeigt und mit dem Bezugszeichen "122" gekennzeichnet. Wie Figur 8 ferner erkennen lässt, ist in dem dargestellten Abschnitt der Verschutzung 22 eine Öffnung 124 in Form eines sich in Richtung des Betrachters von Figur 8 und somit quer zur Ebene von Figur 8 erstreckenden länglichen Schlitzes ausgebildet. Zum Einfädeln eines neuen Metallstreifens 12a bzw. 12b wird das Hilfswerkzeug 110 mit seinem Schaft 112 durch diese Öffnung 124 in der Verschutzung 122 von außen in die Vorrichtung eingeführt und lässt sich aufgrund der schlitzartigen Form der Öffnung 124 in verschiedene Richtungen bewegen. Nach Einführung des Schaftes 112 kann dann die Bedienperson im Zuge eines Bobinenwechsels, beispielsweise von der Bobine 8a auf die (neue) Bobine 8b gemäß Figur 1, den neuen Metallstreifen, beispielsweise den Metallstreifen 12b von der (neuen) Bobine 8b, mit Hilfe des Hilfswerkzeugs 110 greifen und über die Führungsrollen 14 in die Vorrichtung entsprechend einfädeln.

Mindestens eine der beiden Klemmflächen 112c, 114c kann mit einer Friktionsbeschichtung versehen sein, wodurch ein mögliches Durchrutschen des Metallstrei-fens 12a bzw. 12b erschwert oder gar verhindert wird. Eine solche Friktionsbeschichtung kann beispielsweise Keramikmaterial oder Wolframcarbid aufweisen; grundsätzlich sind aber auch andere Werkstoffe denkbar, die eine erhöhte Reibung bewirken. Alternativ oder zusätzlich ist es auch denkbar, mindestens eine der beiden Klemmflächen 112c, 114c, bevorzugt die zweite Klemmfläche 114c am beweglichen Klemmelement 114, mit magnetischem bzw. magnetisierbarem Material zu versehen, wodurch sich der Metallstreifen 12a bzw. 12b besonders einfach und zugleich wirkungsvoll fixieren lässt.

In der Vorrichtung gemäß Figur 1 sind die Bobinen 8a, 8b nicht nur an den Lagerdornen 6 drehbar gelagert, sondern lassen sich auch noch durch einen nicht dargestellten Antrieb in Rotation versetzen. Damit sich der Metallstreifen 12a bzw. 12b mit dem zuvor beschriebenen Hilfswerkzeug 110 komfortabel einfädeln lässt, wird zur Zugunterstützung der Antrieb der neuen Bobine 8a bzw. 8b zugeschaltet. Die Ansteuerung dieser Antriebe erfolgt durch eine nicht dargestellte Steuerungseinrichtung mit Hilfe von ebenfalls nicht dargestellten Sensoren, von denen jeder Sensor bei der Vorrichtung gemäß der in Figur 1a dargestellten Ausführung einer Leitrolle 10 und/oder einer nachgeordneten Führungsrolle 14, bei der Vorrichtung gemäß der in Figur 1b dargestellten Ausführung einer Führungsrolle 14 und bei der Vorrichtung gemäß der in Figur 1c dargestellten Ausführung einer Leitrolle 10 und/oder einer Leitrolle 11 und/oder einer nachgeordneten Führungsrolle 14 zugeordnet ist. Wenn im Zuge eines Bobinenwechsels der neue Metallstreifen 12a bzw. 12b mit Hilfe des Hilfswerkzeugs 110 an einer dieser Rollen entlanggeführt wird, wird diese Rolle in Rotation versetzt. Dies wird von dem zugeordneten Sensor erkannt mit der Folge, dass dann der Antrieb der neuen Bobine, z.B. 8b, zugeschaltet wird. Der Vorteil dieser Maßnahme besteht darin, dass durch Zuschaltung des Antriebes der neuen Bobine der Einfädelvorgang komfortabel unterstützt wird und die Zugunterstützung bei gleichzeitiger Handhabung des Hilfswerkzeuges 110 nicht zusätzlich manuell freigeschaltet werden muss, sondern während des Einfädelbe-triebes bei geschlossener Verschutzung 122 automatisch aktiviert wird. Sobald der Einfädelvorgang abgeschlossen und somit die Handhabung des Hilfswerkzeuges 110 beendet ist, wird die Zugunterstützung wieder abgeschaltet. Die erwähnten Sensoren können beispielsweise als induktive Näherungsschalter ausgebildet sein, die an der zugeordneten Rolle vorgesehene Markierungen, beispielsweise in Form von Löchern, erfassen, um auf diese Weise festzustellen, dass die zugehörige Rolle durch den Einfädelvorgang in Rotation versetzt worden ist. Alternativ ist aber auch beispielsweise denkbar, die Sensoren als Drehwinkelgeber zur Erfassung einer Rotation der zugehörigen Rolle vorzusehen. Alternativ oder zusätzlich ist es beispielsweise auch denkbar, die Drehachse der zugehörigen Rolle zumindest geringfügig positionsveränderlich zu lagern, so dass der dieser Rolle zugeordnete Sensor eine Positionsveränderung der Drehachse dieser Rolle durch das Einfädeln des neuen Metallstreifens erfasst mit der Folge, dass dann der Antrieb der neuen Bobine zugeschaltet wird, wobei ein solcher Sensor bevorzugt als induktiv arbeitender Sensor ausgebildet ist.

## Patentansprüche

1. Vorrichtung für die Tabak verarbeitende Industrie zum Verbinden einer ablaufenden, Metall aufweisenden Materialbahn (12a) mit einer zulaufenden neuen, Metall aufweisenden Materialbahn, mit
- einer Anordnung (24) aus zwei Segmenten (32, 34), die unter Bildung eines Zwischenraumes zur Aufnahme einer Anordnung von übereinanderliegenden, zu verbindenden Materialbahnen (12a, 12b), die eine ablaufende, Metall aufweisende Materialbahn (12a) und eine zulaufende neue, Metall aufweisende Materialbahn (12b) umfassen, voneinander beanstandet sind und jeweils eine Stirnfläche (32a, 34a) aufweisen, wobei mindestens eines der Segmente (32, 34) bewegbar gelagert und in eine Arbeitsstellung verbringbar ist, in der seine Stirnfläche (32a) der Stirnfläche (34a) des anderen Segmentes (34) in einem minimalen Abstand unter Einschluss der Anordnung der zu verbindenden Materialbah-nen (12a, 12b) gegenüberliegt,
- einer Antriebseinrichtung (38, 39) zur Bewegung des mindestens einen Segmentes (32, 34),
- einer Elektroschweißeinrichtung mit einer ersten Elektrodenanordnung (40) der einen Polarität und einer zweiten Elektrodenanordnung (41) der anderen Polarität, wobei die Stirnfläche (32a) des einen Segmentes (32) zumindest mit einem Abschnitt (40a) der ersten Elektrodenanordnung (40) und die Stirnfläche (34a) des anderen Segmentes (34) zumindest mit einem Abschnitt (41a) der zweiten Elektrodenanordnung (41) versehen ist und die Elektroschweißeinrichtung ausgebildet ist, in der Arbeitsstellung der Segmente (32, 34) einen Schweißvorgang zur Verbindung der Materialbahnen (12a, 12b) zu bewirken, und
- einer Steuerungseinrichtung, die zur Steuerung der Antriebseinrichtung (38, 39) derart ausgebildet ist, dass das mindestens eine bewegbar gelagerte Segment (32, 34) in die Arbeitsstellung verbracht und anschließend von der Arbeitsstellung entfernt wird,
- **dadurch gekennzeichnet, dass** die Steuerungseinrichtung ausgebildet ist, das mindestens eine bewegbar gelagerte Segment (32, 34) mit seiner Stirnfläche (32a, 34a) auf eine Bewegung der Anordnung der zu verbindenden Materialbahnen (12a, 12b) derart abzustimmen, dass in der Arbeitsstellung das mindestens eine bewegbar gelagerte Segment (32, 34) mit seiner Stirnfläche (32a, 34a) mit etwa synchroner Geschwindigkeit und etwa parallel zu der Anordnung der zu verbindenden Materialbahnen (12a, 12b) bewegt wird.

2. Vorrichtung nach Anspruch 1,
bei welcher mindestens ein Segment (32, 34) eine Elektrodenverstelleinrich-tung (42) aufweist, die ausgebildet ist, die Elektrodenanordnung (40, 41) räumlich gegenüber der Stirnfläche (32a, 34a) und insbesondere in ihrer Höhe gegenüber der Stirnfläche (32a, 34a) zu verstellen.

3. Vorrichtung nach mindestens einem der vorangegangenen Ansprüche, bei welcher die Steuerungseinrichtung ferner zur Steuerung der Elektroschweißeinrichtung derart ausgebildet ist, dass in der Arbeitsstellung die Elektroschweißeinrichtung für ein bestimmtes Zeitintervall aktiviert wird.

4. Vorrichtung nach mindestens einem der vorangegangenen Ansprüche, bei welcher die Anordnung (24) aus den beiden Segmenten (32, 34) derart getroffen ist, dass in der Arbeitsstellung die Stirnfläche (32a) des einen Segmentes (32) in zumindest berührenden Eingriff mit der einen Seite der Anordnung der zu verbindenden Materialbahnen (12a, 12b) und die Stirnfläche (34a) des anderen Segmentes (34) in zumindest berührenden Eingriff mit der gegenüberliegenden anderen Seite der Anordnung der zu verbindenden Materialbahnen (12a, 12b) bringbar ist.

5. Vorrichtung nach mindestens einem der vorangegangenen Ansprüche, bei welcher die Antriebseinrichtung (38, 39) und die Steuerungseinrichtung zur Steuerung der Antriebseinrichtung (38, 39) derart ausgebildet ist, dass das mindestens eine bewegbar gelagerte Segment von einer Anfangsruhestellung in die Arbeitsstellung beschleunigt, von der Arbeitsstellung in eine Endruhestellung abgebremst und anschließend einer entgegengesetzten Bewegung von der Endruhestellung in die Anfangsruhestellung unterworfen wird, wobei bevorzugt sich die Arbeitsstellung etwa in der Mitte des Bewegungsweges zwischen der Anfangsruhestellung und der Endruhestellung befindet.

6. Vorrichtung nach mindestens einem der vorangegangenen Ansprüche, bei welcher das mindestens eine bewegbar gelagerte Segment (32, 34) um eine Drehachse (36, 37) verschwenkbar gelagert ist, die im Wesentlichen parallel zu einer von der Anordnung der zu verbindenden Materialbahnen (12a, 12b) aufgespannten Ebene und im Wesentlichen rechtwinklig zur Bewegungsrichtung der Anordnung der zu verbindenden Materialbahnen (12a, 12b) orientiert ist.

7. Vorrichtung nach Anspruch 6,
bei welcher die Stirnfläche (32a, 34a) des Segmentes konvex gekrümmt ist, wobei zumindest ein Abschnitt (32aa, 34aa) der Stirnfläche (32a, 34a) eine derartige Krümmung aufweist, dass der Krümmungsradius im Wesentlichen mit dem zwischen der Stirnfläche (32a, 34a) und der Drehachse (36, 37) definierten Schwenkradius zusammenfällt.

8. Vorrichtung nach mindestens einem der vorangegangenen Ansprüche, bei welcher die Stirnfläche (32a, 34a) mindestens eines Segmentes (32, 34) mit einem Klemmeingriffsabschnitt (32ab, 34ab) versehen ist, der für einen klemmenden Eingriff der Anordnung der zu verbindenden Materialbahnen (12a, 12b) ausgebildet ist und bevorzugt an der Stirnfläche (32a, 34a) des Segmentes (32, 34) in Bezug auf die Bewegungsrichtung der Anordnung der zu verbindenden Materialbahnen (12a, 12b) stromabwärts von der Elektrodenanordnung (40, 41) vorgesehen ist.

9. Vorrichtung nach den Ansprüchen 7 und 8,
bei welcher der Klemmeingriffsabschnitt (32ab, 34ab) konvex gekrümmt ist, wobei der Krümmungsradius größer als der Schwenkradius ist.

10. Vorrichtung nach mindestens einem der vorangegangenen Ansprüche, bei welcher beide Segmente (32, 34) bewegbar gelagert sind.

11. Vorrichtung nach mindestens einem der vorangegangenen Ansprüche, mit einer Schwächungseinrichtung (16a, 16b; 50, 52), die ausgebildet ist, im Anfangsabschnitt (12ba) der zulaufenden neuen Materialbahn (12b) und stromaufwärts von dieser im Endabschnitt (12aa) der ablaufenden Materialbahn (12a) jeweils eine geschwächte Stelle (46, 48), insbesondere in Form einer winklig oder quer zur Bewegungsrichtung der Materialbahnen (12a, 12b) orientierten Einkerbung oder einer Rändelung oder mindestens eines Loches oder einer Perforation oder eines Einschnittes oder einer Einschnürung, zu erzeugen.

12. Vorrichtung nach Anspruch 11,
bei welcher die Schwächungseinrichtung (16a, 16b) in Bezug auf die Bewegungsrichtung der Materialbahnen stromaufwärts vor der Anordnung der Segmente vorgesehen ist.

13. Vorrichtung nach Anspruch 11,
bei welcher die Schwächungseinrichtung (50, 52) ein, vorzugsweise als Vorsprung ausgebildetes, erstes Schwächungselement (50), das in Bezug auf die Bewegungsrichtung (A) der Materialbahnen (12a, 12b) stromabwärts nach der Elektrodenanordnung (40, 41) an der Stirnfläche (34a) des einen Segmentes (34) angeordnet und zur Erzeugung einer geschwächten Stelle (46) im Anfangsabschnitt (12ba) der zulaufenden neuen Materialbahn (12b) vorgesehen ist, und ein, vorzugsweise als Vorsprung ausgebildetes, zweites Schwächungselement (52) aufweist, das in Bezug auf die Bewegungsrichtung (A) der Materialbahnen (12a, 12b) stromaufwärts vor der Elektrodena-nordnung (40, 41) an der Stirnfläche (32a) des anderen Segmentes (32) angeordnet und zur Erzeugung einer geschwächten Stelle (48) im Endabschnitt (12aa) der ablaufenden Materialbahn (12a) vorgesehen ist.

14. Vorrichtung nach mindestens einem der vorangegangenen Ansprüche,
mit einer ersten Aussonderungseinrichtung (30), die in Bezug auf die Bewegungsrichtung (A) der Materialbahnen (12a, 12b) stromabwärts nach der Anordnung (24) der Segmente (32, 34) vorgesehen und ausgebildet ist, den vorlaufenden Anfangsabschnitt (12ba) der zulaufenden neuen Materialbahn (12b) auszusondern, und einer zweiten Aussonderungseinrichtung (20), die in Bezug auf die Bewegungsrichtung (A) der Materialbahnen (12a, 12b) stromaufwärts vor der Anordnung (24) der Segmente (32, 34) vorgesehen und ausgebildet ist, den nachlaufenden Endabschnitt (12aa) der ablaufenden Materialbahn (12a) auszusondern, wobei die Steuerungseinrichtung zur Steuerung der beiden Aussonderungseinrichtungen (20, 30) derart ausgebildet ist, dass zumindest temporär in der ersten Aussonderungseinrichtung (30) der vorlaufende Anfangsabschnitt (12ba) der zulaufenden neuen Materialbahn (12b) mit einer Bewegungsgeschwindigkeit transportiert wird, die höher als die Bewegungsgeschwindigkeit der Materialbahnen (12a, 12b) im Bereich der Arbeitsstellung der Segmente (32, 34) ist, und in der zweiten Aussonderungseinrichtung (20) der nachlaufende Endabschnitt (12aa) der ablaufenden Materialbahn (12a) mit einer Bewegungsgeschwindigkeit transportiert wird, die geringer als die Bewegungsgeschwindigkeit der Materialbahnen (12a, 12b) im Bereich der Arbeitsstellung der Segmente ist.

15. Vorrichtung nach mindestens einem der vorangegangenen Ansprüche, mit einer Tänzeranordnung (60),
**dadurch gekennzeichnet, dass** die Tänzeranordnung (60) eine stationäre mehrbahnige Rollenanordnung (64) und eine bewegliche mehrbahnige Rollenanordnung (66) aufweist, die beiden Rollenanordnungen (64, 66) um eine halbe Bahnbreite zueinander versetzt angeordnet sind und die Materialbahn (12) zwischen den beiden Rollenanordnungen (64, 66) nach Art eines Flaschenzuges geführt ist.

16. Vorrichtung nach mindestens einem der vorangegangenen Ansprüche,
**gekennzeichnet durch** eine Bahntrenneinrichtung (90), die Schneidmittel (93, 94) zum Durchschneiden der Materialbahn (12) und einen in Förderrichtung der Materialbahn (12) stromabwärts gelegenen, schwenkbar gelagerten Hebel (96), an dessen freiem Ende ein Führungselement, bevorzugt eine Rolle, (98) zum Führen der Materialbahn (12) vorgesehen ist, aufweist, wobei die Schneidmittel (93, 94) mit dem Hebel (96) so gekoppelt sind, dass durch eine Schwenkbewegung des Hebels (96) die Schneidmittel (93, 94) zum Durchtrennen der Materialbahn (12) aktiviert werden.

17. Vorrichtung mit einer ersten Vorrichtung nach mindestens einem der vorangegangenen Ansprüche und einer in Bezug auf die Bewegungsrichtung der Materialbahnen stromabwärts vorgesehenen zweiten Vorrichtung, die zur Verbindung eines nach Abtrennung eines vorlaufenden Anfangsabschnittes gebildeten vorlaufenden Endes (12bb) der zulaufenden neuen Materialbahn (12b) mit der ablaufenden Materialbahn (12a) und im Übrigen nach mindestens einem der vorangegangenen Ansprüche ausgebildet ist.

## Claims

1. Apparatus for the tobacco processing industry for connecting an outgoing metal-containing material web (12a) with an incoming new metal-containing material web, comprising
- an arrangement (24) consisting of two segments (32, 34) which, while forming an intermediate space for receiving an arrangement of overlying material webs (12a, 12b) to be connected including an outgoing metal-containing material web (12a) and an incoming new metal-containing material web (12b), are spaced apart from one another and each comprise an end face (32a, 34a), wherein at least one of the segments (32, 34) is movably mounted and can be brought into a working position in which its end face (32a) is opposite to the end face (34a) of the other segment (34) at a minimum distance while including the arrangement of the material webs (12a, 12b) to be connected,
- a drive device (38, 39) for moving the at least one segment (32, 34),
- an electric welding device comprising a first electrode arrangement (40) of the one polarity and a second electrode arrangement (41) of the other polarity, wherein the end face (32a) of the one segment (32) is at least provided with a portion (40a) of the first electrode arrangement (40) and the end face (34a) of the other segment (34) is at least provided with a portion (41a) of the second electrode arrangement (41) and, in the working position of the segments (32, 34), the electric welding device is configured to effect a welding operation for connecting the material webs (12a, 12b), and
- a control device configured to control the drive device (38, 39) such that the at least one movably mounted segment (32, 34) is brought into the working position and then taken out of the working position,
- **characterised in that** the control device is configured to adapt the at least one movably mounted segment (32, 34) with its end face (32a, 34a) to a movement of the arrangement of the material webs (12a, 12b) to be connected in such a way that, in the working position, the at least one movably mounted segment (32, 34) with its end face (32a, 34a) is moved at approximately synchronous speed and approximately parallel to the arrangement of the material webs (12a, 12b) to be connected.

2. Apparatus according to Claim 1,
in which at least one segment (32, 34) comprises an electrode adjustment device (42) which is configured to adjust the electrode arrangement (40, 41) spatially relative to the end face (32a, 34a), and in particular in terms of its height relative to the end face (32a, 34a).

3. Apparatus according to at least one of the preceding claims, in which the control device is further configured to control the electric welding device such that, in the working position, the electric welding device is activated for a specific time interval.

4. Apparatus according to at least one of the preceding claims, in which the arrangement (24) consisting of the two segments (32, 34) is such that, in the working position, the end face (32a) of the one segment (32) is in at least touching engagement with the one side of the arrangement of the material webs (12a, 12b) to be connected and the end face (34a) of the other segment (34) is in at least touching engagement with the opposite other side of the arrangement of the material webs (12a, 12b) to be connected.

5. Apparatus according to at least one of the preceding claims, in which the drive device (38, 39) and the control device for controlling the drive device (38, 39) are configured such that the at least one movably mounted segment is accelerated from an initial rest position into the working position, decelerated from the working position into a final rest position and then subjected to an opposite movement from the final rest position into the initial rest position, wherein the working position is preferably approximately midway in the movement path between the initial rest position and the final rest position.

6. Apparatus according to at least one of the preceding claims, in which the at least one movably mounted segment (32, 34) is mounted such that it can pivot about an axis of rotation (36, 37) that is substantially parallel to a plane opened by the arrangement of the material webs (12a, 12b) to be connected and substantially perpendicular to the direction of movement of the arrangement of the material webs (12a, 12b) to be connected.

7. Apparatus according to Claim 6,
in which the end face (32a, 34a) of the segment is convexly curved, wherein at least a portion (32aa, 34aa) of the end face (32a, 34a) has such a curvature that the radius of curvature substantially coincides with the pivot radius defined between the end face (32a, 34a) and the axis of rotation (36, 37).

8. Apparatus according to at least one of the preceding claims, in which the end face (32a, 34a) of at least one segment (32, 34) is provided with a clamping engagement portion (32ab, 34ab) which is configured for a clamping engagement of the arrangement of the material webs (12a, 12b) to be connected and is preferably provided on the end face (32a, 34a) of the segment (32, 34), with respect to the direction of movement of the arrangement of the material webs (12a, 12b) to be connected, downstream of the electrode arrangement (40, 41).

9. Apparatus according to Claims 7 and 8,
in which the clamping engagement portion (32ab, 34ab) is convexly curved, wherein the radius of curvature is greater than the pivot radius.

10. Apparatus according to at least one of the preceding claims, in which both segments (32, 34) are movably mounted.

11. Apparatus according to at least one of the preceding claims, comprising a weakening device (16a, 16b; 50, 52) which is configured to produce a respective weakened location (46, 48), in particular in the form of a notch or a knurling or at least one hole or a perforation or an incision or a constriction oriented at an angle or transverse to the direction of movement of the material webs (12a, 12b), in the starting portion (12ba) of the incoming new material web (12b) and upstream thereof in the end portion (12aa) of the outgoing material web (12a).

12. Apparatus according to Claim 11,
in which the weakening device (16a, 16b) is provided, with respect to the direction of movement of the material webs, upstream of the arrangement of the segments.

13. Apparatus according to Claim 11,
in which the weakening device (50, 52) comprises a first weakening element (50), which is preferably configured as a projection and is disposed, with respect to the direction of movement (A) of the material webs (12a, 12b), downstream of the electrode arrangement (40, 41) on the end face (34a) of the one segment (34) and is provided for producing a weakened location (46) in the starting portion (12ba) of the incoming new material web (12b), and a second weakening element (52), which is preferably configured as a projection and is disposed, with respect to the direction of movement (A) of the material webs (12a, 12b), upstream of the electrode arrangement (40, 41) on the end face (32a) of the other segment (32) and is provided for producing a weakened location (48) in the end portion (12aa) of the outgoing material web (12a).

14. Apparatus according to at least one of the preceding claims, comprising a first discarding device (30), which is provided, with respect to the direction of movement (A) of the material webs (12a, 12b), downstream of the arrangement (24) of the segments (32, 34) and is configured to discard the leading starting portion (12ba) of the incoming new material web (12b), and a second discarding device (20), which is provided, with respect to the direction of movement (A) of the material webs (12a, 12b), upstream of the arrangement (24) of the segments (32, 34) and is configured to discard the trailing end portion (12aa) of the outgoing material web (12a), wherein the control device is configured for controlling the two discarding devices (20, 30) such that, at least temporarily in the first discarding device (30), the leading starting portion (12ba) of the incoming new material web (12b) is transported at a speed of movement that is higher than the speed of movement of the material webs (12a, 12b) in the region of the working position of the segments (32, 34), and, in the second discarding device (20), the trailing end portion (12aa) of the outgoing material web (12a) is transported at a speed of movement that is less than the speed of movement of the material webs (12a, 12b) in the region of the working position of the segments.

15. Apparatus according to at least one of the preceding claims, comprising a dancer arrangement (60),
**characterised in that** the dancer arrangement (60) comprises a stationary multi-web roller arrangement (64) and a movable multi-web roller arrangement (66), the two roller arrangements (64, 66) are disposed offset to one another by half a web width and the material web (12) is guided between the two roller arrangements (64, 66) in the manner of a pulley.

16. Apparatus according to at least one of the preceding claims, **characterised by** a web separating device (90) comprising cutting means (93, 94) for cutting through the material web (12) and a pivotably mounted lever (96) disposed downstream in the conveying direction of the material web (12) on the free end of which a guide element, preferably a roller, (98) is provided for guiding the material web (12), wherein the cutting means (93, 94) are coupled to the lever (96) such that a pivoting movement of the lever (96) activates the cutting means (93, 94) for cutting though the material web (12).

17. Apparatus comprising a first apparatus according to at least one of the preceding claims and a second apparatus which is provided downstream with respect to the direction of movement of the material webs and is configured to connect a leading end (12bb) of the incoming new material web (12b) formed after separation of a leading starting portion to the outgoing material web (12a) and otherwise according to at least one of the preceding claims.

## Revendications

1. Dispositif pour l'industrie de transformation du tabac, permettant de relier une bande de matériau (12a) sortante présentant du métal à une nouvelle bande de matériau entrante présentant du métal, comprenant
- un agencement (24) constitué de deux segments (32, 34) qui sont espacés l'un de l'autre avec formation d'un espace intermédiaire permettant d'accueillir un agencement de bandes de matériau (12a, 12b) superposées devant être reliées qui comprennent une bande de matériau (12a) sortante présentant du métal et une nouvelle bande de matériau (12b) entrante présentant du métal et présentent respectivement une surface frontale (32a, 34a), au moins un des segments (32, 34) étant monté de manière mobile et pouvant être amené dans une position de travail au sein de laquelle sa surface frontale (32a) fait face à la surface frontale (34a) de l'autre segment (34) à une distance minimale incluant l'agencement des bandes de matériau (12a, 12b) devant être reliées,
- un dispositif d'entraînement (38, 39) permettant de déplacer ledit au moins un segment (32, 34),
- un dispositif de soudage électrique avec un premier agencement d'électrodes (40) présentant une polarité et un second agencement d'électrodes (41) présentant l'autre polarité, la surface frontale (32a) d'un segment (32) étant munie d'au moins une section (40a) du premier agencement d'électrodes (40) et la surface frontale (34a) de l'autre segment (34) étant munie d'au moins une section (41a) du second agencement d'électrodes (41), et le dispositif de soudage électrique étant conçu pour effectuer une opération de soudage dans la position de travail des segments (32, 34) afin de relier les bandes de matériau (12a, 12b), et
- un dispositif de commande conçu pour commander le dispositif d'entraînement (38, 39) de telle manière que ledit au moins un segment (32, 34) monté de manière mobile soit amené dans la position de travail et soit ensuite éloigné de la position de travail,
- **caractérisé en ce que** le dispositif de commande est conçu pour adapter ledit au moins un segment (32, 34) monté de manière mobile avec sa surface frontale (32a, 34a) à un mouvement de l'agencement des bandes de matériau (12a, 12b) devant être reliées de telle manière que, dans la position de travail, ledit au moins un segment (32, 34) monté de manière mobile avec sa surface frontale (32a, 34a) soit déplacée à une vitesse approximativement synchrone et de manière approximativement parallèle à l'agencement des bandes de matériau (12a, 12b) devant être reliées.

2. Dispositif selon la revendication 1,
dans lequel au moins un segment (32, 34) présente un dispositif de réglage d'électrode (42) qui est conçu pour régler l'agencement d'électrodes (40, 41) dans l'espace par rapport à la surface frontale (32a, 34a) et en particulier dans sa hauteur par rapport à la surface frontale (32a, 34a).

3. Dispositif selon au moins une des revendications précédentes,
dans lequel le dispositif de commande est en outre conçu pour commander le dispositif de soudage électrique de telle manière que, dans la position de travail, le dispositif de soudage électrique soit activé pendant un intervalle de temps déterminé.

4. Dispositif selon au moins une des revendications précédentes,
dans lequel l'agencement (24) des deux segments (32, 34) est constitué de telle manière que, dans la position de travail, la surface frontale (32a) d'un segment (32) puisse être amenée au moins en contact avec un côté de l'agencement des bandes de matériau (12a, 12b) devant être reliées et la surface frontale (34a) de l'autre segment (34) puisse être amenée au moins en contact avec l'autre côté, faisant face, de l'agencement des bandes de matériau (12a, 12b) devant être reliées.

5. Dispositif selon au moins une des revendications précédentes,
dans lequel le dispositif d'entraînement (38, 39) et le dispositif de commande permettant de commander le dispositif d'entraînement (38, 39) sont conçus de telle manière que ledit au moins un segment monté de manière mobile soit accélé entre une position de repos initiale et la position de travail, soit freiné entre la position de travail et une position de repos finale et soit ensuite soumis à un mouvement opposé entre la position de repos finale et la position de repos initiale, la position de travail se trouvant de manière préférée approximativement au milieu du trajet de déplacement entre la position de repos initiale et la position de repos finale.

6. Dispositif selon au moins une des revendications précédentes,
dans lequel ledit au moins un segment (32, 34) monté de manière mobile est monté de manière à pouvoir pivoter autour d'un axe de rotation (36, 37) qui est orienté de manière essentiellement parallèle à un plan défini par l'agencement des bandes de matériau (12a, 12b) devant être reliées et de manière essentiellement perpendiculaire par rapport à la direction de déplacement de l'agencement des bandes de matériau (12a, 12b) devant être reliées.

7. Dispositif selon la revendication 6,
dans lequel la surface frontale (32a, 34a) du segment est incurvée de manière convexe, au moins une section (32aa, 34aa) de la surface frontale (32a, 34a) présentant une courbure telle que le rayon de courbure coïncide essentiellement avec le rayon de pivotement défini entre la surface frontale (32a, 34a) et l'axe de rotation (36, 37).

8. Dispositif selon au moins une des revendications précédentes,
dans lequel la surface frontale (32a, 34a) d'au moins un segment (32, 34) est munie d'une section de mise en prise par serrage (32ab, 34ab) conçue pour mettre en prise par serrage l'agencement des bandes de matériau (12a, 12b) devant être reliées et est prévue de manière préférée au niveau de la surface frontale (32a, 34a) du segment (32, 34) en aval de l'agencement d'électrodes (40, 41) par rapport à la direction de déplacement de l'agencement des bandes de matériau (12a, 12b) devant être reliées.

9. Dispositif selon les revendications 7 et 8,
dans lequel la partie de mise en prise par serrage (32ab, 34ab) est incurvée de manière convexe, le rayon de courbure étant supérieur au rayon de pivotement.

10. Dispositif selon au moins une des revendications précédentes,
dans lequel les deux segments (32, 34) sont montés de manière mobile.

11. Dispositif selon au moins une des revendications précédentes,
comprenant un dispositif d'affaiblissement (16a, 16b ; 50, 52) qui est conçu pour produire, dans la section initiale (12ba) de la nouvelle bande de matériau (12b) entrante et, en amont de celle-ci, dans la section finale (12aa) de la bande de matériau (12a) sortante, respectivement un point d'affaiblissement (46, 48), en particulier sous la forme d'une entaille orientée de manière angulaire ou transversale par rapport à la direction de déplacement des bandes de matériau (12a, 12b) ou d'un moletage ou d'au moins un trou ou d'une perforation ou d'une incision ou d'une gorge.

12. Dispositif selon la revendication 11,
dans lequel le dispositif d'affaiblissement (16a, 16b) est prévu en amont de l'agencement des segments par rapport à la direction de déplacement des bandes de matériau.

13. Dispositif selon la revendication 11,
dans lequel le dispositif d'affaiblissement (50, 52) comprend un premier élément d'affaiblissement (50), de manière préférée réalisé sous forme de saillie, qui est agencé au niveau de la surface frontale (34a) d'un segment (34) en aval de l'agencement d'électrodes (40, 41) par rapport à la direction de déplacement (A) des bandes de matériau (12a, 12b) et qui est prévu afin de produire un point d'affaiblissement (46) dans la section initiale (12ba) de la nouvelle bande de matériau (12b) entrante, et un second élément d'affaiblissement (52), de manière préférée réalisé sous forme de saillie, qui est agencé au niveau de la surface frontale (32a) de l'autre segment (32) en amont de l'agencement d'électrodes (40, 41) par rapport à la direction de déplacement (A) des bandes de matériau (12a, 12b) et qui est prévu afin de produire un point d'affaiblissement (48) dans la section finale (12aa) de la bande de matériau (12a) sortante.

14. Dispositif selon au moins une des revendications précédentes,
comprenant un premier dispositif de rejet (30) qui est prévu en aval de l'agencement (24) des segments (32, 34) par rapport à la direction de déplacement (A) des bandes de matériau (12a, 12b) et est conçu pour rejeter la section initiale (12ba) de tête de la nouvelle bande de matériau (12b) entrante, et un second dispositif de rejet (20) qui est prévu en amont de l'agencement (24) des segments (32, 34) par rapport à la direction de déplacement (A) des bandes de matériau (12a, 12b) et est conçu pour rejeter la section finale (12aa) de queue de la bande de matériau (12a) sortante, le dispositif de commande étant conçu pour commander les deux dispositifs de rejet (20, 30) de telle manière que la section initiale (12ba) de tête de la nouvelle bande de matériau (12b) entrante soit transportée au moins temporairement dans le premier dispositif de rejet (30) à une vitesse de déplacement qui est supérieure à la vitesse de déplacement des bandes de matériau (12a, 12b) dans la région de la position de travail des segments (32, 34), et la section finale (12aa) de queue de la bande de matériau (12a) entrante soit transportée dans le second dispositif de rejet (20) à une vitesse de déplacement inférieure à la vitesse de déplacement des bandes de matériau (12a) dans la région de la position de travail des segments,

15. Dispositif selon au moins une des revendications précédentes, comprenant un agencement compensateur (60),
**caractérisé en ce que** l'agencement compensateur (60) comprend un agencement de rouleaux à bandes multiples stationnaire (64) et un agencement de rouleaux à bandes multiples mobile (66), les deux agencements de rouleaux (64, 66) sont agencés de manière décalée l'un par rapport à l'autre d'une demi-largeur de bande, et la bande de matériau (12) est guidée entre les deux agencements de rouleaux (64, 66) à la manière d'un palan.

16. Dispositif selon au moins une des revendications précédentes, **caractérisé par** un dispositif de séparation de bande (90) qui comprend des moyens de coupe (93, 94) permettant de sectionner la bande de matériau (12) et un levier (96) monté pivotant et placé en aval dans la direction de convoyage de la bande de matériau (12) et au niveau de l'extrémité libre duquel est prévu un élément de guidage, de manière préférée un rouleau, (98) permettant de guider la bande de matériau (12), les moyens de coupe (93, 94) étant couplés au levier (96) de sorte que les moyens de coupe (93, 94) permettant de sectionner la bande de matériau (12) soient activés grâce à un mouvement de pivotement du levier (96).

17. Dispositif comprenant un premier dispositif selon au moins une des revendications précédentes et un second dispositif prévu en aval par rapport à la direction de déplacement des bandes de matériau qui est conçu pour relier une extrémité (12bb) de tête, formée après séparation d'une section initiale de tête, de la nouvelle bande de matériau (12b) entrante à la bande de matériau (12a) sortante, et qui est conçu du reste selon au moins une des revendications précédentes.
